# EUROPEAN PATENT SPECIFICATION

(11) **EP 4 381 279 B1**
(45) Date of publication and mention of the grant of the patent: **07.10.2026**
(21) Application number: 21777388.6
(22) Date of filing: 05.08.2021
(51) Int. Cl.: G01N 21/01, G01N 21/64, G01N 27/447, G01N 21/03

(54) **CAPILLARY ARRAY WINDOW HOLDER RELATED SYSTEMS AND METHODS**
HALTER MIT FENSTER FÜR KAPILLAR-ARRAY UND ZUGEHÖRIGE SYSTEME UND VERFAHREN
SUPPORT AVEC FENÊTRE POUR UN RÉSEAU DE CAPILLAIRES ET SYSTÈMES ET MÉTHODES ASSOCIÉS

(43) Date of publication of application: 12.06.2024
(73) Proprietor: Agilent Technologies, Inc., Santa Clara, CA 95051-7201 (US)
(72) Inventor: GRIESZ, Paul, Santa Clara, CA 95051-7201 (US); STEBNISKI, Michael, Santa Clara, CA 95051-7201 (US)
(74) Representative: Grünecker Patent- und Rechtsanwälte PartG mbB
(86) International application number: PCT/US2021/044806
(87) International publication number: WO 2023/014367

(56) References cited:
- WO-A1-99/39191
- US-A1- 2006 219 559
- US-B1- 8 404 092
- UENO K ET AL: "SIMULTANEOUS MONITORING OF DNA FRAGMENTS SEPARATED BY ELECTROPHORESIS IN A MULTIPLEXED ARRAY OF 100 CAPILLARLES", ANALYTICAL CHEMISTRY, AMERICAN CHEMICAL SOCIETY, US, vol. 66, no. 9, 1 May 1994 (1994-05-01), pages 1424 - 1431, XP000446027, ISSN: 0003-2700, DOI: 10.1021/AC00081A010

## Description

### TECHNICAL FIELD

The present invention generally relates to a capillary array window holder configured for holding a parallel arrangement of capillaries, particularly the window sections of such capillaries. The invention also relates to apparatus, assemblies, and systems that include such holder, and methods that utilize such holder. The capillaries may be utilized to contain samples that are to be measured by an optics-based instrument, for example an instrument that measures fluorescence or absorbance. The capillaries can be utilized, for example, for capillary electrophoresis (CE).

### BACKGROUND

Analytical instruments often utilize capillaries (i.e., tubes with bores on the scale of micrometers) to contain and transport sample-containing fluids (in either liquid phase or gas phase) for various purposes. In some analytical instruments, a capillary-or at least an optically transparent section of a capillary, referred to as a capillary window-may be utilized as a sample detection cell. In this case, the analytical instrument is configured to make optical-based measurements (e.g., fluorescence, absorbance, imaging, etc.) of analytes of a sample (i.e., sample components of interest such as chemical compounds or biological compounds) contained in the capillary by reading electromagnetic energy emitted from the sample. Such emission may be in response to the sample being irradiated by a beam of electromagnetic energy directed to the capillary window by a light source of the analytical instrument. In some analytical instruments, the capillary may include a separation medium formulated to separate different analytes of the sample on the basis of different properties or attributes, such as molecular size, molecular composition, electrical charge, etc. In some analytical techniques, the separation medium may be stationary (i.e., a stationary phase) within the capillary window. In this case, the sample is carried by a fluid (i.e., a mobile phase) through the capillary and into contact with the separation medium. As the sample migrates through the separation medium, different analytes of the sample become separated from each other, thereby facilitating detection/measurement of the analytes by the analytical instrument. Examples of analytical separation techniques include capillary electrophoresis (CE, particularly capillary gel electrophoresis or CGE), liquid chromatography (LC), and gas chromatography (GC).

Sample analysis may be enhanced by operating multiple capillary windows in parallel, with each capillary window containing an individual sample. In this case, the analytical instrument may be configured to read, or in addition irradiate, the multiple capillary windows simultaneously. In this case, a compact packaging of the capillaries is favorable to enable a high magnification of the capillaries on the camera provided with the analytical instrument. When analytical separation such as CE is being implemented, compact packaging enables a higher resolution and sensitivity of the detected separation. However, once the spacing between capillaries reaches a certain degree of compactness, such as 1.5 mm or smaller, cross-talk effects between adjacent capillaries are induced and have a deleterious effect on the background of the detection/imaging signal acquired by the analytical instrument. This can lead to target sample conflicts and/or misrepresentations of sample concentration. Most commercially available analytical instruments utilizing a parallel array of capillary windows (e.g., 96 capillaries) are adversely affected by cross-talk related issues, because they position the capillary windows with a very small spacing (e.g., 0.025 mm) so that they can map all of the capillaries with a reasonable magnification ratio. When using a smaller number of parallel capillaries (e.g., twelve, spaced by about 1.5 mm), an artificially large field of view has been required to render insignificant the effects of cross-talk. This has led to an artificial limit on magnification of the capillaries on the camera or detector utilized by the analytical instrument, and consequently a limit on resolution and sensitivity of the acquired data. If an application requires a high excitation intensity, the capillaries must be spaced tightly to guarantee adequately high illumination, which leads to significant cross-talk that significantly increases the background noise in the detection signal.

WO 99/39191 A1 discloses an electrophoresis device comprising a plurality of capillary columns each having a detection area, and a detection device having an imaging device and a detecting camera. The capillary columns are mounted on a shared holder in such a way that the detection areas form parallel straight rows which are imaged on the detecting camera by means of the imaging device, wherein grooves of the holder locate the capillaries in optical isolation. The spacing of surface fins of the holder forms grooves matching the capillary diameter.

US 2006/219559 A1 discloses an apparatus having a set of capillaries filled with a phoretic medium and fixed to a support plate and an electrode holder. A temperature control plate is in contact with the set of capillaries and a surface of the support plate. The structure for the support plate is manufactured by punching a plastic substrate. The surface of the substrate on which the set of capillaries are arranged is in contact with the temperature control plate. The capillaries are fixed to a sheet of the support plate where one surface of which is in direct contact with a heater of the oven. The capillaries are arranged side by side and covered with a window plate as a light screening member provided with window holes for transmitting fluorescence from a sample and preventing cross-talk of fluorescence. The window hole may also be constituted not as a physical aperture but by forming only the desired regions with a light transparent member.

The article of UENO K ET AL: "SIMULTANEOUS MONITORING OF DNA FRAGMENTS SEPARATED BY ELECTROPHORESIS IN A MULTIPLEXED ARRAY OF 100 CAPILLARLES", ANALYTICAL CHEMISTRY, AMERICAN CHEMICAL SOCIETY, US, vol. 66, no. 9, 1 May 1994 (1994-05-01), pages 1424-1431, discloses evaluating various excitation schemes for distributing a laser beam to a large number of capillaries in an array in a multiplexed system for monitoring the electrophoresis of DNA fragments in 100 capillaries. The laser-excited fluorescence signals from each capillary are simultaneously recorded by a CCD camera. The reconstructed electropherograms show excellent reproducibility and minimal cross-talk. The capillaries are held by an aluminum block, wherein 100 triangle-shaped grooves are machined on the surface of the aluminum block for setting the 100 capillaries, the block being painted black to reduce stray light.

There is an ongoing need to provide capillary arrays that overcome the problems associated with cross-talk effects.

### SUMMARY

To address the foregoing problems, in whole or in part, and/or other problems that may have been observed by persons skilled in the art, the present disclosure provides methods, processes, systems, apparatus, instruments, and/or devices, as described by way of example in implementations set forth below.

The present invention is defined in claim 1.

For example, the present disclosure provides a capillary array window holder that includes multiple capillary channels. The present disclosure further provides a capillary array assembly that includes a capillary array window holder and multiple capillaries disposed in the respective capillary channels. At least a section of each capillary channel is an open channel. The capillaries include respective windows, i.e., sections of the capillaries not covered by an outer coating and thus allowing transmission of electromagnetic radiation into and out from the windows. The capillaries are mounted in the capillary channels such that the windows are located in the open channels. The open channels, and thus the windows, are exposed to electromagnetic radiation (e.g., excitation light as described herein) on at least one side of the capillary array window holder. The exposed side may also be utilized for detecting electromagnetic radiation (e.g., emission light as described herein) emitted from or detectable at the windows. Alternatively, two opposing sides (e.g., a top side and a bottom side) of the capillary array window holder, at least where the open channels and thus the windows are located, may be exposed to electromagnetic radiation. This latter configuration may be useful, for example, for irradiating the open channels (and thus the windows) on one side and detecting electromagnetic radiation emitted from or detectable at the windows from the opposite side. Adjacent open channels are separated from each other by window bars. The window bars block line of sight between adjacent windows to reduce or eliminate cross-talk between adjacent capillaries when making an optical-based measurements of the samples. A capillary array assembly as described herein may be mounted in (or installed in, docked to, coupled to, etc.) a sample analysis system configured to make optical-based measurements on samples in the capillaries. In one non-exclusive example, the sample analysis system may be configured to perform capillary electrophoresis on the samples.

According to one example, a capillary array window holder includes: a first end section; a second end section; a window section disposed between the first end section and the second end section along a longitudinal axis, and comprising a plurality of window bars extending along the longitudinal axis and spaced from each other along a transverse axis orthogonal to the longitudinal axis, wherein: the window bars define a plurality of parallel open channels configured to respectively contain a plurality of capillaries, and are composed of an opaque material such that the window bars block line of sight along the transverse axis between adjacent open channels; and the open channels are exposed on a top side of the window section to allow transmission of light to and from the open channels at the top side.

According to another example, a capillary array assembly includes: a capillary array window holder according to any of the examples disclosed herein; and a plurality of capillaries, each capillary disposed in a respective one of the capillary channels such that windows of each capillary are respectively positioned in the open channels.

According to another example, a capillary array assembly includes: a plurality of capillary array window holders according to any of the examples disclosed herein; and a plurality of capillaries, each capillary disposed in a respective one of the capillary channels in each capillary array window holder, such that windows of each capillary are respectively positioned in the open channels.

According to another example, a sample analysis system includes: a capillary array assembly according to any of the examples disclosed herein; and a light detector positioned in optical alignment with the open channels.

According to another example, a method for analyzing a sample includes: providing a capillary array assembly according to any of the examples disclosed herein; and making an optical measurement of samples respectively detectable at the windows to acquire optical data from one or more analytes of the samples.

Other devices, apparatus, systems, methods, features and advantages will be or will become apparent to one with skill in the art upon examination of the following figures and detailed description.

### BRIEF DESCRIPTION OF THE DRAWINGS

The invention can be better understood by referring to the following figures. The components in the figures are not necessarily to scale, emphasis instead being placed upon illustrating the principles of the invention. In the figures, like reference numerals designate corresponding parts throughout the different views.
Figure 1 is a top perspective view of one non-exclusive example of a capillary array assembly according to the present disclosure.
Figure 2 is a bottom perspective view of the capillary array assembly illustrated in Figure 1.
Figure 3 is a top plan view of the capillary array assembly illustrated in Figure 1.
Figure 4 is an elevation view of a first end of the capillary array assembly illustrated in Figure 1.
Figure 5 is an elevation view of a second end of the capillary array assembly illustrated in Figure 1.
Figure 6 is cross-sectional elevation view of a portion of a central section of the capillary array assembly illustrated in Figure 1.
Figure 7 is a top perspective view of another example of a capillary array assembly according to the present disclosure.
Figure 8 is a cross-sectional elevation view of another example of a portion of a central section of a capillary array assembly according to the present disclosure.
Figure 9 is a top plan view of another example of a capillary array assembly according to the present disclosure.
Figure 10 is a perspective view of a capillary array window holder of the capillary array assembly illustrated in Figure 9.
Figure 11 is a top perspective view of another example of a capillary array assembly according to the present disclosure.
Figure 12 is an exploded, top perspective view the capillary array assembly illustrated in Figure 11.
Figure 13 is a top perspective view of another example of a capillary window holder according to the present disclosure.
Figure 14 is a top plan view of the capillary window holder illustrated in Figure 13.
Figure 15 is a longitudinal side view of another example of a capillary array assembly according to the present disclosure, which includes the capillary array window holder illustrated in Figures 13 and 14.
Figure 16 is a schematic view of an example of a sample analysis system (or apparatus, analytical instrument, etc.) that includes a capillary array assembly according to any of the examples described herein.

### DETAILED DESCRIPTION

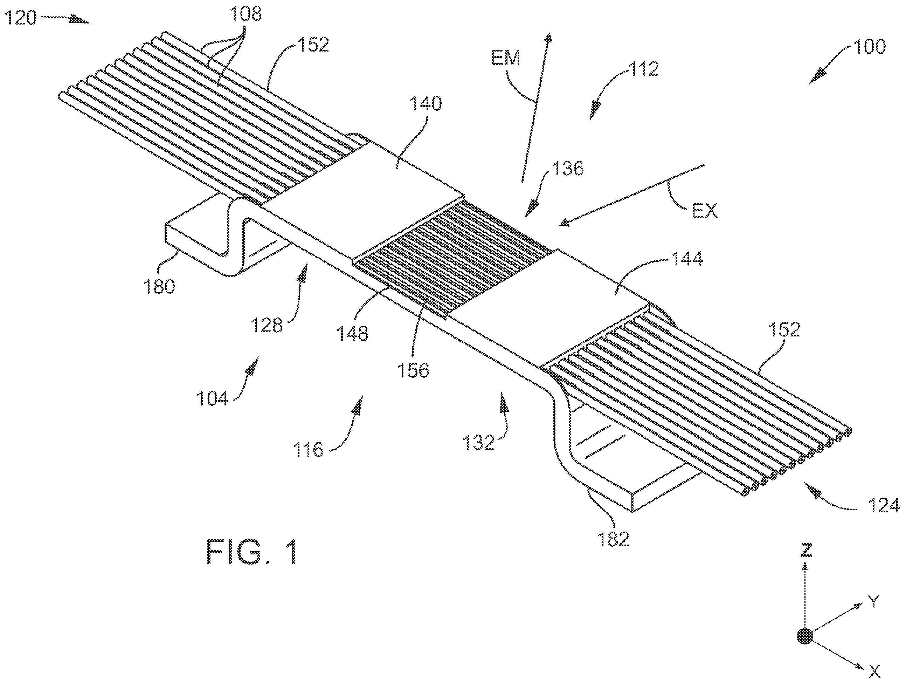

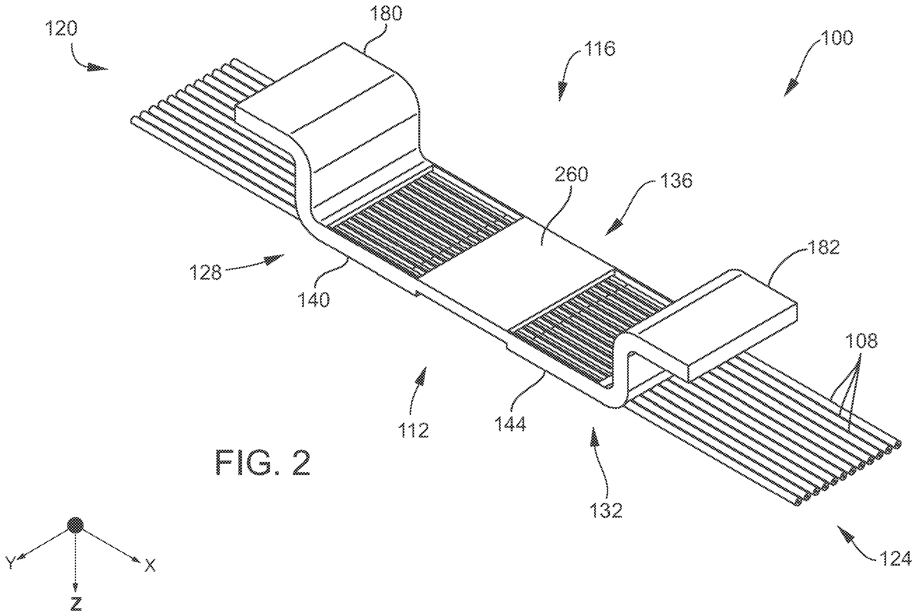

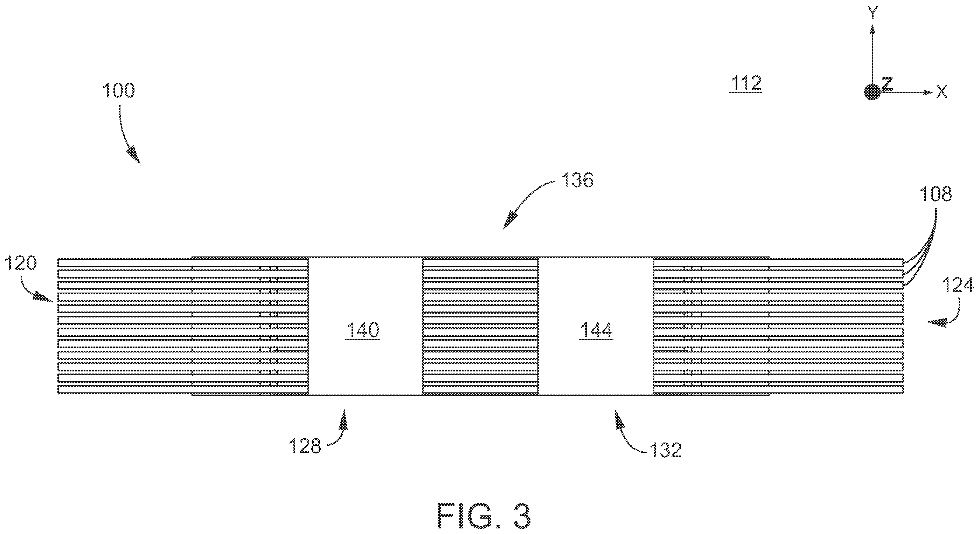

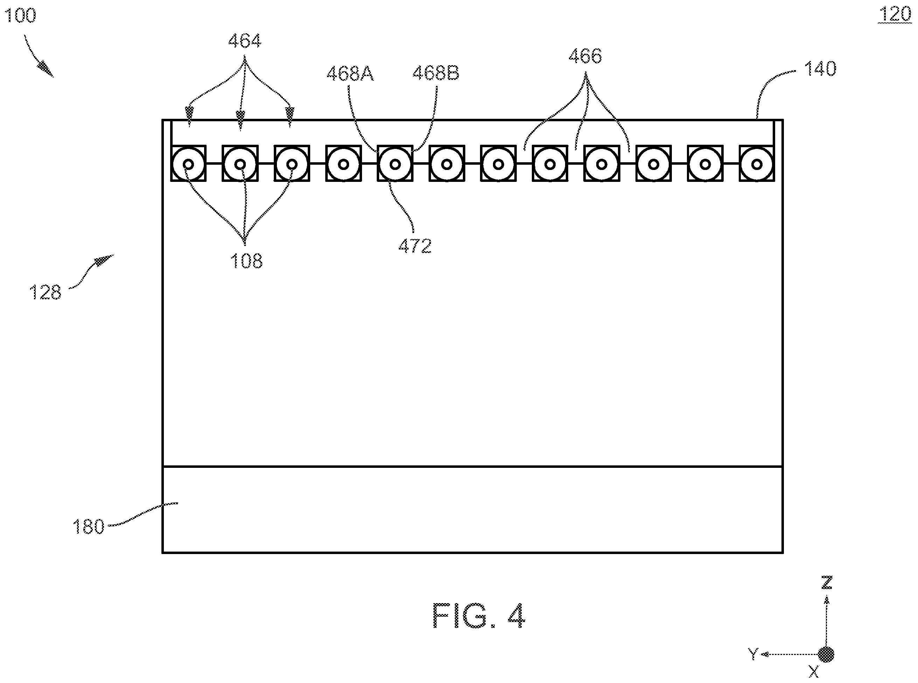

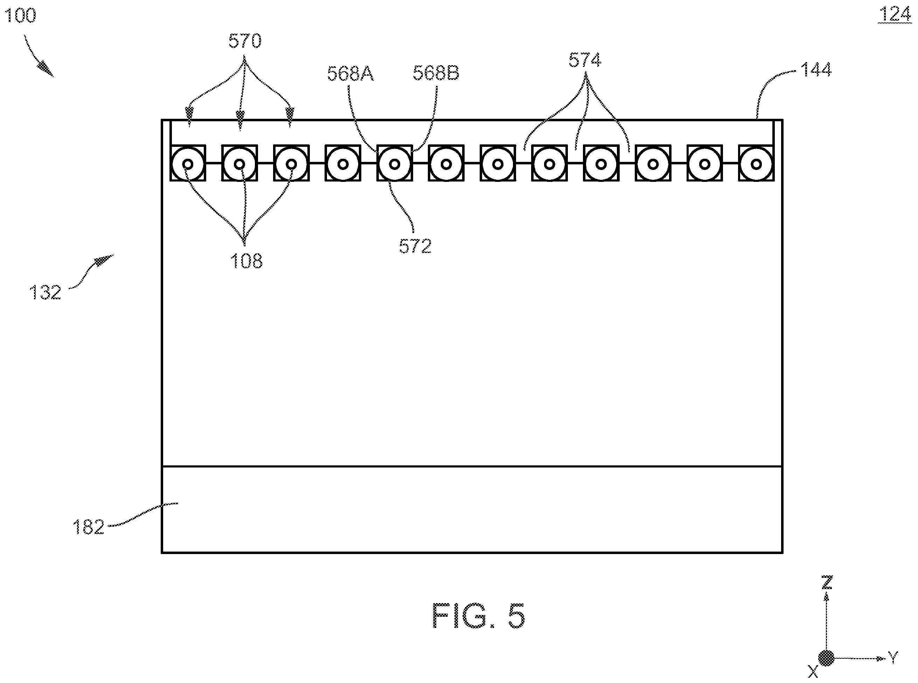

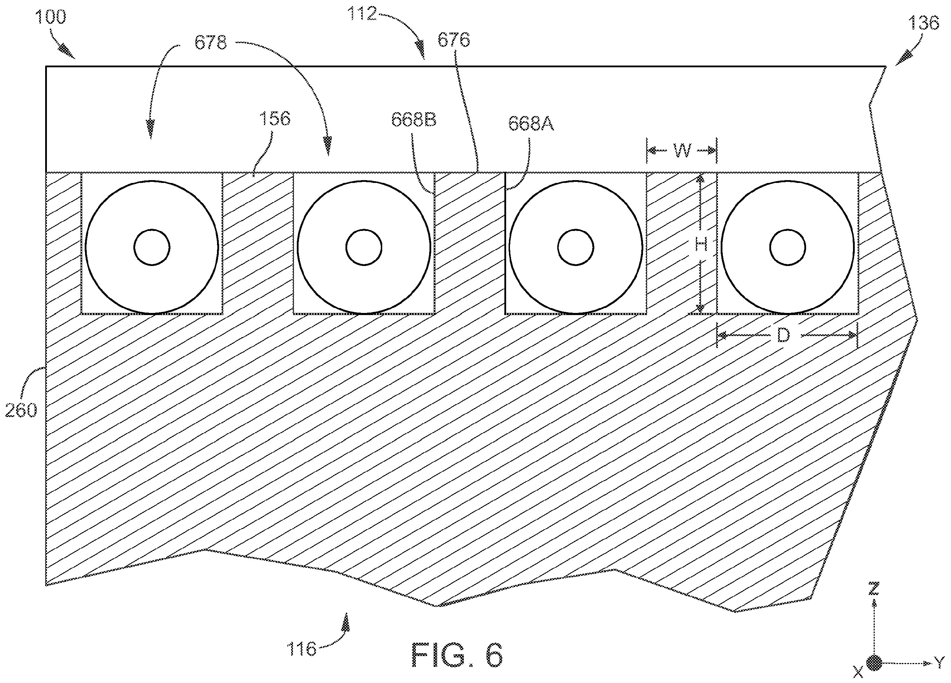

Figures 1-6 illustrate one non-exclusive example of a capillary array assembly 100 according to the present disclosure. Figures 1 and 2 are respective top and bottom perspective views of the capillary array assembly 100. For purposes of reference and description, Figure 1 includes an arbitrarily positioned Cartesian coordinate (x-y-z) frame. The x-axis, y-axis, and z-axis are also referred to herein as the longitudinal axis (or capillary axis), transverse axis, and elevational axis, respectively. Dimensions along the x-axis, y-axis, and z-axis are taken to be length, width, and height, respectively. The y-z plane is also referred to herein as the transverse plane. In this example, the capillary array assembly 100 is elongated along the longitudinal axis (x-axis). Also, in this example, the top plan view of Figure 3 is in the x-y plane. Also, the end (elevation) views of Figures 4 and 5 and the cross-sectional view of Figure 6 are in the y-z (transverse) plane.

The capillary array assembly 100 includes a capillary array window holder 104 and a plurality of capillaries 108. The capillary array window holder 104 is configured to securely hold the capillaries 108 in a parallel arrangement, such that the capillaries 108 are spaced from each other along the transverse axis and are retained in fixed positions and fixed distances from each other. For this purpose, the capillary array window holder 104 includes a plurality of capillary channels, described below. Each capillary 108 is disposed in a respective one of the capillary channels. In the illustrated example, twelve capillaries 108 are provided in twelve capillary channels, but the capillary array assembly 100 may include any number of capillary channels and corresponding number of capillaries 108.

The capillary array window holder 104 is defined by a body of material. The body may be single-piece (monolithic) or may include two or more parts attached or fastened together. Depending on the embodiment, the entire body of the capillary array window holder 104, or at least certain parts of the body noted below, are opaque to light. In the context of this disclosure, an "opaque" material (or a "black" material) is a material that is effective for blocking electromagnetic energy propagating at wavelengths in a certain range, such as by absorbing and/or reflecting such electromagnetic energy. In the context of this disclosure, the term "light" refers to electromagnetic energy (i.e., photons) in a general sense and thus is not limited to electromagnetic energy only in the visible range. Depending on the embodiment, the wavelength range desired to be blocked may be in the ultraviolet range, the visible range, the infrared range, or a combination or overlap of two or more of these ranges. In the context of this disclosure, the ultraviolet range is taken as spanning from 10 nm to 400 nm, the visible range is taken as spanning from 400 nanometers (nm) to 700 nm, and the infrared range is taken as spanning from 700 nm to 1000 nm (1 millimeter (mm)), with the recognition that the foregoing ranges may slightly differ and/or may slightly overlap depending on the technical source relied upon. In one non-exclusive example, the opaque material is opaque to light propagating at wavelengths in a range from 190 nm to 800 nm.

Examples of opaque (or black) materials for the body of the capillary array window holder 104 include, but are not limited to, various metals (e.g., aluminum, nickel, copper, etc.), various metal alloys, and different types of silicon, ceramics, glasses and polymers, including technical plastics (e.g., polyoxymethylene (POM), liquid-crystal polymer (LCP), polyacrylamide (PA), polycarbonate (PC), poly(methyl methacrylate) (PMMA), polyether ether ketone (PEEK), polyethylene (PE), etc.). The material, depending on its composition, may need to be treated to render it opaque (black) as part of the manufacturing process, as appreciated by persons skilled in the art. In the case of a metal or metal alloy, for example, the material (or at least its outer surface) may be rendered opaque by an appropriate anodizing, plating or oxidizing technique.

Generally, any technique appropriate for the material utilized (e.g., organic polymer, metal, metalloid, etc.) may be employed for fabricating/manufacturing the capillary array window holder 104. The specific fabrication technique implemented should be one highly suitable for forming the high-aspect ratio window bars described herein with highly precise dimensions and geometries (shapes), and with at least one of the dimensions (height and/or width) being on the scale of micrometers. In the case of a polymer, examples of manufacturing techniques include, but are not limited to, micro injection molding and 3D printing. In the case of a metal or metalloid, various additive, subtractive, and formative manufacturing techniques may be employed. Examples of additive techniques include, but are not limited to, 3D printing (e.g., lithography-based metal manufacturing (LMM)), galvanoforming, electroforming or electrodeposition, chemical vapor deposition (CVD), and physical vapor deposition (PVD). Examples of subtractive techniques include, but are not limited to, dry etching (e.g., plasma-based etching, including reactive ion etching (RIE) and deep reactive ion etching (DRIE), etc.), wet etching (i.e., chemical etching, such as by using hydrofluoric acid or other acid) and subsequent diffusion bonding, micromachining, micro milling, micro laser machining, and micro electrical discharge machining (EDM). Examples of formative techniques include, but are not limited to, micro stamping, micro embossing, and LIGA (German: Lithographie, Galvanoformung, Abformung).

In the illustrated example, the capillary array window holder 104 (i.e., the body thereof) generally includes a top side 112 and a bottom side 116 in the x-y plane, a first end 120, and a second end 124 axially opposite to the first end 120 along the longitudinal axis (x-axis). In the context of this disclosure, the terms "top" and "bottom" are relative to each other only, for distinguishing them from each other, and are not intended to limit the capillary array assembly 100 to any particular orientation relative to ground or to any other reference datum. The capillary array window holder 104 (i.e., the body thereof) also includes a first end section 128 terminating at the first end 120, a second end section 132 terminating at the second end 124, and a window section 136. In this example, the window section 136 is disposed between the first end section 112 and the second end section 116 along the longitudinal axis, and thus may also be referred to as a central section. In this example, the largest dimension of the capillary array window holder 104 is its longitudinal dimension (its length). In other examples, however, the largest dimension of a capillary array window holder is not necessarily its longitudinal dimension.

The first end section 128 includes a first top wall 140 on the top side 112, and the second end section 132 includes a second top wall 144 on the top side 112. The first top wall 140 covers the portions of the capillaries 108 passing through the first end section 128, and the second top wall 144 covers the portions of the capillaries 108 passing through the second end section 132. The first top wall 140 and the second top wall 144 may be composed of an opaque material as described above. Thus, the first top wall 140 and the second top wall 144 prevent light from being transmitted either into or out from the capillaries 108 in the first end section 128 and the second end section 132 via the top side 112. Stated in another way, the first top wall 140 and the second top wall 144 block any line of sight to or from the capillaries 108 in directions to or from the top side 112.

In another embodiment, the first top wall 140 and the second top wall 144 may not be part of the body of the capillary array window holder 104 itself. Instead, the first top wall 140 and the second top wall 144 may be part of an instrument console into which the capillary array assembly 100 is to be docked for operation, or part of a cartridge to which the capillary array assembly 100 is to be mounted, which cartridge may in turn be docked into an instrument console.

In the present example, each capillary 108 includes a tube composed of an optically transparent material. In the context of this disclosure, a "transparent" material is a material that allows transmission of light propagating at wavelengths in a range that includes (at least) the wavelength or wavelengths of excitation light EX and emission light EM (described further below) employed in the use of the capillary array assembly 100. Depending on the embodiment, the excitation light EX and/or emission light EM may be ultraviolet light, visible light, or infrared light. Examples of the material of the tube include, but are not limited to, silica, fused silica, fused quartz, doped (synthetic) fused silica, and polymers like polytetrafluoroethylene (PTFE) (e.g., for UV detection). Portions of each capillary 108 (e.g., the majority of the length of each capillary 108) are coated, i.e., are circumferentially surrounded by a coating. The coating serves to protect the tube from damage or breaking, and also to block the transmission of light into and out from the tube. Examples of the material of the coating include, but are not limited to, polyimide (PI), acrylate, silicone, and fluoropolymers. On the other hand, at least one portion of each capillary 108 is bare (i.e., is not coated) such that the transparent tube is exposed to the ambient and thus light. Accordingly, each capillary 108 includes a bare (or exposed, or uncoated) section, referred to herein as a capillary window 148, and coated sections 152 on both sides (along the longitudinal axis) of the capillary window 148. As an example, the capillaries 108 may be fabricated by first forming the tubes, then coating the entire lengths of the tubes, and then stripping the coating from sections of the capillaries 108 to form the capillary windows 148, all of which may be done by any suitable techniques now known or later developed.

In contrast to the first end section 128 and the second end section 132, the window section 136 does not include a top wall on the top side 112. That is, the window section 136 is open (or has an opening) at the top side 112, thereby exposing the capillaries 108 (specifically, the portions of the capillaries 108 passing through the window section 136, namely the capillary windows 148) to the ambient space on the top side 112. The capillaries 108 are mounted in the capillary array window holder 104 such that the capillary windows 148 are aligned in parallel with each other (in the transverse plane) and are positioned in the window section 136. Thus, the capillary windows 148 are exposed on the top side 112 to light through the opening of the window section 136. By this configuration, the window section 136 defines an excitation (or combined excitation/detection) area of the capillary array assembly 100. In an example, the length of the opening of the window section 136 is in a range from 500 µm to 4 mm.

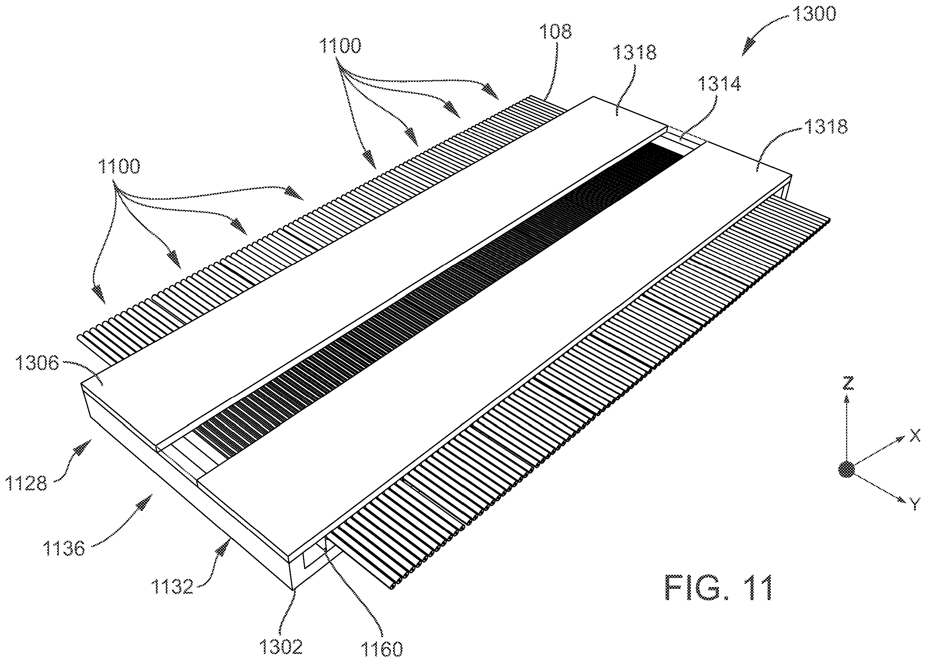

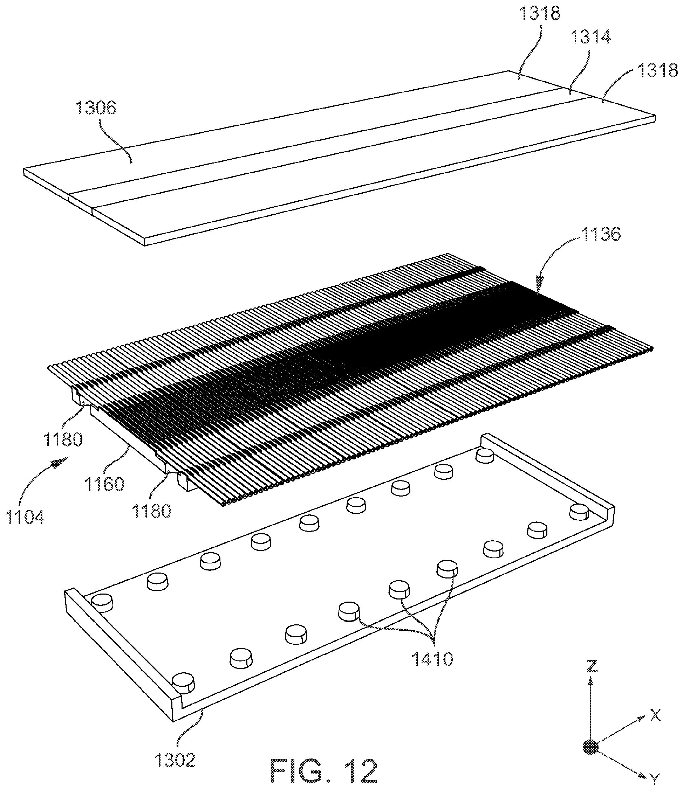

In some examples, the window section 136 may be covered by a transparent wall or cover (not shown, but see Figures 11 and 12), which may be configured to protect and/or assist in fixing the positions of the capillaries in the capillary array window holder 104. That is, at least a portion of a top wall or cover positioned directly above the capillary windows 148 is transparent. Depending on the embodiment, such transparent wall may be considered as being part of the capillary array assembly 100, or part of an instrument console into which the capillary array assembly 100 is to be docked for operation, or part of a cartridge to which the capillary array assembly 100 is to be mounted as noted above.

In an example, the lengths of the capillary windows 148 are greater than the length of the opening of the window section 136. In this case, the first top wall 140 of the first end section 128 and the second top wall 144 of the second end section 132 cover the portions of the capillary windows 148 extending underneath the first top wall 140 and the second top wall 144, as well as the coated sections 152 immediately adjacent to the capillary windows 148/ window section 136. Thus, the first top wall 140 and the second top wall 144 provide an additional means for blocking transmission of light to and from the capillaries 108. In particular, in an analytical instrument configured to measure fluorescence emitted from analytes in the capillaries 108, the first top wall 140 and the second top wall 144 prevent the coated sections 152 from being exposed to light such as excitation light EX, and thus prevent or block the emittance of fluorescent light from the coated sections 152. This is particularly advantageous if the coating material itself auto-fluoresces or fluoresces in response to excitation light EX. Fluorescent signals produced by the coating material could be detected by the analytical instrument and, consequently, undesirably contribute to noise (or background signal) in the optical measurements acquired. In the present example, however, the first top wall 140 and the second top wall 144 prevent such unwanted fluorescent light from reaching the detector (or camera) of the analytical instrument.

In the context of this disclosure, excitation light EX may refer to a beam (or ray) of light directed from a light source external to the capillary array assembly 100 to the capillaries 108 in the window section 136 (i.e., the capillary windows 148) to thereby irradiate the samples residing in the respective capillaries 108. The beam of excitation light EX may or may not be coherent, depending on the embodiment. Such light source may be part of an analytical instrument configured to perform an optical-based measurement on analytes in the samples to determine a property or attribute (e.g., concentration of one or more analytes), and/or to acquire a microscopic image, etc. Emission light EM may refer to light emitted from each capillary 108 (i.e., each capillary window 148) in response to the incident excitation light EX, which may be collected by a detector (or camera) of the analytical instrument.

In some examples, the excitation light EX may be utilized to illuminate the sample in the capillary 108 to measure absorbance (or transmittance) and/or to acquire a microscopic image. In other examples, the excitation light EX of a selected wavelength may be utilized to "excite" target analytes in the sample in the capillary 108 by inducing fluorescence (e.g., from an inherently fluorescent analyte, or from a fluorophore added or bound to an analyte, etc.). For convenience, the term "excitation" is used herein to refer to all such cases, including illumination not involving fluorescence. In the example of acquiring an image, the emission light EM is the light emitted from the capillary 108 within the field of view of a camera, which is processed as needed to construct an image of the sample in the capillary illuminated by the excitation light EX. In the example of measuring absorbance (or transmittance), the emission light EM emitted from the capillary 108 is attenuated due to partial absorbance of the excitation light EX by the sample in the capillary 108. In such case, the emission light EM may be of the same wavelength as the excitation light EX. In the example of measuring fluorescence, the emission light EM is the light emitted from analytes responsive to the wavelength of the excitation light EX. In such case, the emission light EM is of a different wavelength than the excitation light EX. Another example is fluorescent microscopy, in which the captured images are based in part on fluorescent emission. For convenience, the term "emission" is used herein to refer to all such cases, including the transmission of non-fluorescent light.

The window section 136 further includes a plurality of window bars (or central bars) 156 arranged in parallel and spaced from each other along the transverse axis. In this example, the window bars 156 are elongated along the longitudinal axis, generally extending along the length of the window section 136 from the first end section 128 to the second end section 132. The window bars 156 are arranged in parallel with, and are interdigitated with, the capillaries 108 such that each capillary 108 is flanked on both sides by respective window bars 156 along the transverse axis. Accordingly, each capillary 108 (in particular, the capillary window 148 in the window section 136) is physically separated from an adjacent capillary 108 on either side by an interposing window bar 156. The window bars 156 are composed of an opaque material as described above, and thus serve as optical shields as described further below.

Referring to Figure 2, in the present example, the window section 136 further includes a bottom wall 260 located on the bottom side 116 of the capillary array window holder 104. The bottom wall 260 may span the entire area of the window section 136 to cover the portions of the capillaries 108 passing through the window section 136, i.e., the capillary windows 148. The window bars 156 extend upward from the bottom wall 260, and may be in contact with or integral with the bottom wall 260. Particularly when the capillary array window holder 104 formed as a monolithic body, the bottom wall 260 may be composed of the same opaque material as other components of the capillary array window holder 104 described herein. Depending on the embodiment, the opaque material may be desired or needed to prevent light from being transmitted either into or out from the capillaries 108 in the window section 136 via the bottom side 116.

The bottom wall 260 may be provided in applications that perform both excitation and detection on the same side of the capillary array assembly 100, for example the top side 112 as schematically depicted by the EX and EM beams in Figure 1. Depending on the embodiment of the analytical instrument and the type of optical-based measurement technique performed thereby, the angle between the EX beam and EM beam may range, for example, from 0 degrees to 65 degrees. In other embodiments, the capillary array assembly 100 may be configured for transmitting light through the capillaries 108 from the top side 112 to the bottom side 116, in which case the bottom wall 260 is not provided as described further below in conjunction with other embodiments.

In the example shown in Figure 2, the first end section 128 and the second end section 132 do not include bottom walls. Instead, the first top wall 140 and the second top wall 144 may serve as the primary structural members of the first end section 128 and the second end section 132. The coating of the capillaries 108 in the first end section 128 and the second end section 132 may provide adequate optical shielding on the bottom side 116, particularly if the capillary array assembly 100 is mounted to an enclosure (e.g., an internal portion of an analytical instrument) that optically shields the bottom side 116. In other examples, however, the first end section 128 and/or the second end section 132 may include bottom walls.

Figure 4 is an elevation view of the first end 120 of the capillary array assembly 100, in particular illustrating the first end section 128. In the present example, the first end section 128 includes a plurality of first end channels 464 that extend along the longitudinal axis and are spaced from each other along the transverse axis. The first end channels 464 are arranged to hold or contain the respective capillaries 108. The first end channels 464 are cooperatively defined by the first top wall 140 and a plurality of first inside surfaces. Specifically, each first end channel 464 is cooperatively defined by the underside (inside surface) of the first top wall 140 and one of more first inside surfaces (depending on the shape or profile of the cross-section of the first end channel 464). The first end channels 464 are "closed" channels in the sense that they are fully enclosed by (internal to) the structure of the first end section 128, and in particular are covered by the first top wall 140. In the illustrated example, the first end channels 464 have rectilinear (e.g., rectangular or square) cross-sections in the transverse plane. In this case, each first end channel 464 is defined by the underside of the first top wall 140 and three first inside surfaces: two lateral inside surfaces 468A and 468B (in the x-z plane) adjoined by a bottom inside surface 472 (in the x-y plane).

The first end section 128 further includes a plurality of first end bars (or dividers) 466 elongated along the longitudinal axis. The first end bars 466 are aligned with, and may be integral with or extensions of, the corresponding window bars 156 of the window section 136. In the present example, each first end bar 466 includes the lateral inside surface 468A of one first end channel 464 and the adjacent lateral inside surface 468B of a neighboring first end channel 464. Like the window bars 156 of the window section 136, the first end bars 466 are arranged in parallel with, and are interdigitated with, the capillaries 108 such that each capillary 108 is physically separated from an adjacent capillary 108 on either side by an interposing first end bar 466.

Figure 5 is an elevation view of the second end 124 of the capillary array assembly 100, in particular illustrating the second end section 132. The configuration of the second end section 132 may be the same as or similar to that of the first end section 128. Accordingly, the second end section 132 includes a plurality of axially elongated, second end channels 570 arranged to hold or contain the respective capillaries 108. The second end channels 570 are cooperatively defined by the second top wall 144 and a plurality of first inside surfaces, specifically two lateral inside surfaces 568A and 568B adjoined by a bottom inside surface 572 in the present example. The second end section 132 further includes a plurality of axially elongated, second end bars (or dividers) 574, each of which includes the lateral inside surface 568A of one second end channel 570 and the adjacent lateral inside surface 568B of a neighboring second end channel 570. The second end bars 574 are aligned with, and may be integral with or extensions of, the corresponding window bars 156 of the window section 136. Like the window bars 156 and the first end bars 466, the second end bars 574 are arranged in parallel with, and are interdigitated with, the capillaries 108 such that each capillary 108 is physically separated from an adjacent capillary 108 on either side by an interposing second end bar 574.

The capillaries 108 may be fixed in position in the first end channels 464 and/or the second end channels 570 by any suitable means. For example, a resin or other adhesive may be utilized.

Figure 6 is cross-sectional elevation view of a portion of the window section 136. The window bars 156 extend along the longitudinal axis between corresponding first end bars 466 of the first end section 128 and second end bars 574 of the second end section 132. The window section 136 includes a plurality of open channels 678 that extend along the longitudinal axis and are spaced from each other along the transverse axis. Each open channel 678 holds or contains a respective one of the capillaries 108, specifically the capillary window 148. The open channels 678 are defined by the window bars 156. Each window bar 156 is interposed between two neighboring open channels 678 and thus also physically separates the capillary windows 148 residing in those open channels 678. In the present example, the open channels 678 are also defined by the underlying bottom wall 260 of the central section 136 (specifically, the exposed upper surface of the bottom wall 260). The open channels 678 are "open" in the sense that they are exposed to at least one side of the capillary array window holder 104 (the top side 112 in the present example), thereby allowing light to be transmitted to and from the capillary windows 148 via that side (the top side 112).

Accordingly, the capillary channels of the capillary array window holder 104 are defined at least by the window section 136, and particularly by the open channels 678 of the window section 136. In the present example, the capillary channels are cooperatively defined by the first end section 128, the second end section 132, and the window section 136. Specifically, each capillary channel includes one of the open channels 678 aligned along the longitudinal axis with a corresponding one of the first end channels 464 and a corresponding one of the second end channels 570. According to an aspect of the present disclosure, the capillary channels are configured (e.g., sized and positioned) to block line of sight between adjacent capillaries 108 in directions along the transverse axis. In particular, the window bars 156 are configured to block line of sight along the transverse axis between adjacent capillary windows 148. By this configuration, the capillary array window holder 104 may significantly reduce (or even eliminate) cross-talk between adjacent capillary windows 148 (capillary-to-capillary cross-talk).

In the example shown in Figure 6, each window bar 156 includes (or is bounded by) a lateral inside surface 668A that at least partially defines one open channel 678, a lateral inside surface 668B that at least partially defines a neighboring open channel 678, and an upper surface 676 (in the x-y plane) that adjoins the two lateral inside surfaces 668A and 668B. Each window bar 156 has a bar width W along the transverse axis corresponding to the upper surface 676, and a bar height H along the elevational axis corresponding to the lateral inside surfaces 668A and 668B. Thus, each window bar 156 has a transverse cross-section in the transverse plane defined by the bar width W and the bar height H. To facilitate the blocking of line of sight (and thus the reduction or elimination of cross-talk) between the capillary windows 148, the bar height H is at least equal to, and typically (at least slightly) greater than, the outer capillary diameter D of the capillary windows 148. Typically, the outer capillary diameter D is on the scale of micrometers (µm), i.e., less than 1 millimeter (mm). In one example, the outer capillary diameter D is in a range from 25 µm to 250 µm, or 90 µm to 200 µm (one specific example being 192 µm), in which case the bar height H is in a range from at least 25 µm to 250 µm, or 90 µm to 200 µm, or greater than 250 µm. In one example, the bar height H is greater than the outer capillary diameter D by an amount in the range of 5 µm to 25 µm. Typically, the bar width W is on the scale of micrometers. In one example, the bar width W is in a range from 25 µm to 1500 µm, or from 25 µm to 100 µm.

The size of the transverse cross-section (i.e., the cross-sectional area) of each window bar 156 may be characterized by a bar aspect ratio *A* of the bar 156, defined herein as the ratio of bar height H to bar width W (*A* = H:W). In addition to affecting the ability of the window bar 156 to block line of sight between adjacent capillary windows 148 as described above, the bar aspect ratio *A* determines the pitch of (or transverse spacing between) the open channels 678 and thus the capillary windows 148. The pitch in turn determines the density of the packing of the capillaries 108 in (the window section 136 of) the capillary array window holder 104, and thus the number of capillary windows 148 that can be read by the detection or imaging optics of an associated analytical instrument. In one example, the bar aspect ratio *A* is in a range from 1 to 10.

Because the high-aspect ratio window bars 156 reduce cross-talk, they allow the capillary windows 148 to be arranged with a high degree of compactness without appreciably affecting signal to noise ratio. Thus, the window bars 156 may lower background noise and enable higher magnification and better resolution, sensitivity, and sample quantification by the analytical instrument. Moreover, the open channels 678 defined by the window bars 156 position the capillary windows 148 in a highly precise and clearly defined manner, enabling highly precise and reproducible docking and alignment with the optical components of the analytical instrument. Further, the capillary array window holder 104 provides highly effective mechanical protection of the fragile capillaries 108.

In the examples described above, the transverse cross-sections of the capillary channels are rectilinear. However, the transverse cross-sections may have other types of shapes, such as other types of polygonal shapes, or partially rounded shapes. In another example, a portion of the transverse cross-sections, in particular the bottom surfaces of the capillary channels, may be (partially) V-shaped, which may facilitate proper positioning of the capillaries 108 in the capillary channels. When configuring the bottom surfaces as (or to include) V-shaped grooves, such V-shaped geometry should not impair the ability of the capillary array window holder 104, as disclosed herein, to realize a high packaging density of the capillaries 108 while maintaining a light-shielding bar between the capillaries 108.

The capillary array assembly 100 may be mounted to any suitable analytical instrument configured to make optical-based measurements on analytes contained in the capillaries 108. Depending on the embodiment, the capillary array assembly 100 may be loaded directly in the console of the analytical instrument and positioned in alignment with the optical system of the analytical instrument, or may be configured as part of a cassette that is loaded in the console. In the example illustrated in Figure 1, the capillary channels (and corresponding array of capillaries 108) lie in a capillary plane, and the capillary array window holder 104 includes one or more mounting features lying in a mounting plane that is offset from the capillary plane along the elevational axis. In the illustrated example, the mounting feature includes a first mounting member 180 and a second mounting member 182 that may be part of or attached to the first end section 128 and the second end section 132, respectively. The first mounting member 180 and the second mounting member 182 may be secured in the instrument console (or to a cartridge that is in turn secured in the instrument console) in any suitable manner. The first mounting member 180 and the second mounting member 182, or another part of the capillary array window holder 104, may include other mounting features not shown, as well as features for locating and fixing the capillaries 108 into precise positions, reference features for facilitating threading the capillaries 108 into the capillary channels, features for facilitating optical alignment with the optical system of the analytical instrument, etc.

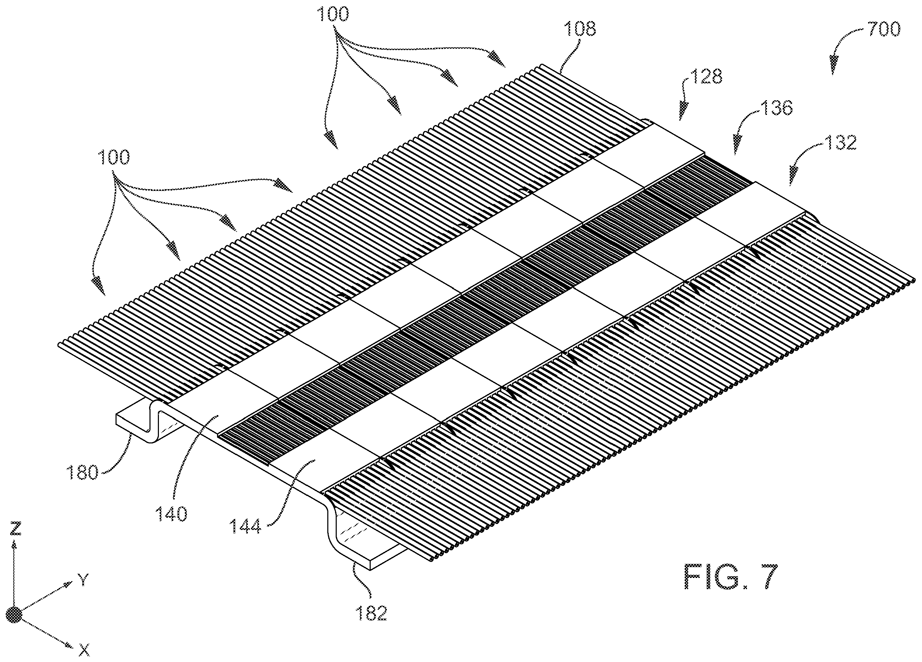

Figure 7 is a top perspective view of another example of a capillary array assembly 700 according to the present disclosure. The capillary array assembly 700 may have many features that are the same as or similar to those of the capillary array assembly 100 illustrated in Figure 1. Accordingly, such features are indicated by the same reference numerals in Figure 7. The capillary array assembly 700 is mainly different in that it has a greater number of capillaries 108 (96 capillaries 108 in the present example). In one example and as illustrated in Figure 7, the capillary array assembly 100 has a modular configuration that allows several individual capillary array assemblies 100 (configured as described above) to be arranged in parallel to thereby provide a larger number of capillaries 108 as desired. In other words, the capillary array assembly 700 in Figure 7 may be constructed from several capillary array assemblies 100, such as eight of them in the illustrated example. In such case, the smaller capillary array assemblies 100 may be considered as being modules or segments of the larger capillary array assembly 700.

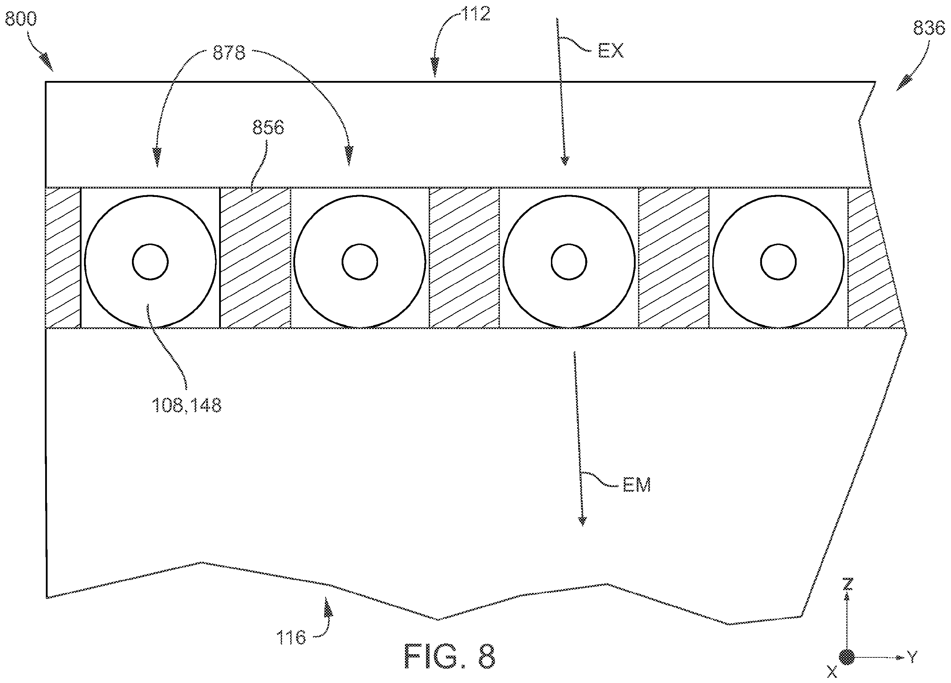

Figure 8 is a cross-sectional elevation view of another example of a capillary array assembly 800 according to the present disclosure. Specifically, Figure 8 is a cross-sectional view of a portion of a window section 836 of the capillary array assembly 800, with window bars 856 and open channels 878 containing capillary windows 148. The window section 836 shown in Figure 8 may be compared to the window section 136 of the capillary array assembly 100 shown in Figure 6. In the present example, the window section 836 does not have a bottom wall, and instead the open channels 878 are open on the bottom side 116 as well as on the top side 112. By this through-illumination configuration, the capillary array assembly 800 allows light transmission through the window section 836, as depicted by the EX and EM beams in Figure 8. That is, in a through-illumination configuration, light can be transmitted through the window section 836 on both the top side and the bottom side of the capillary array window holder of the capillary array assembly 800. In this case, the window bars 856 may be structurally supported by other parts of the capillary array assembly 800, such as axial end sections of the window holder body of the capillary array assembly 800. In one example, such axial end sections are similar to the first end section 128 and second end section 132 described above in conjunction with Figures 1-5.

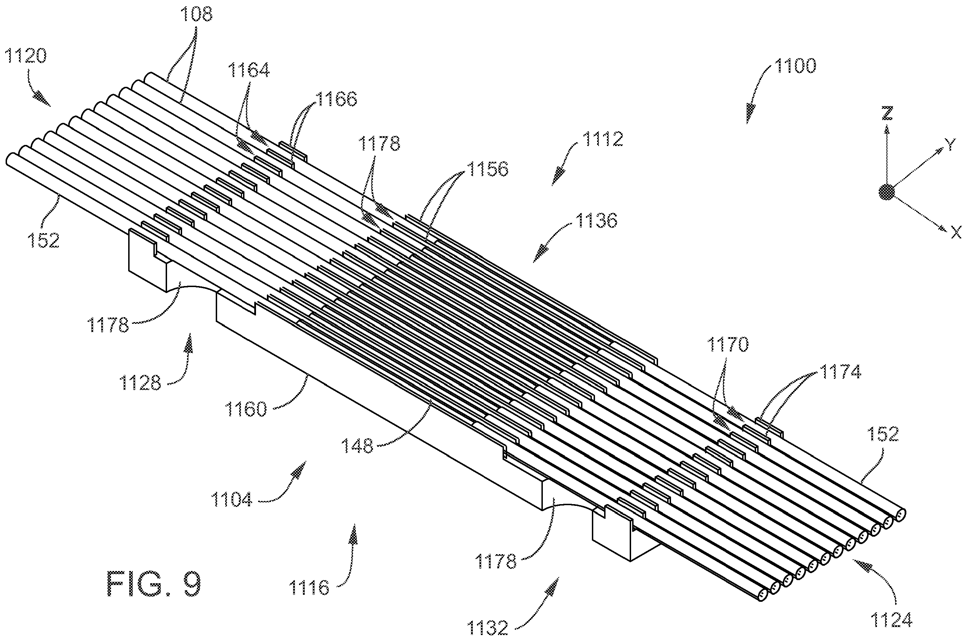

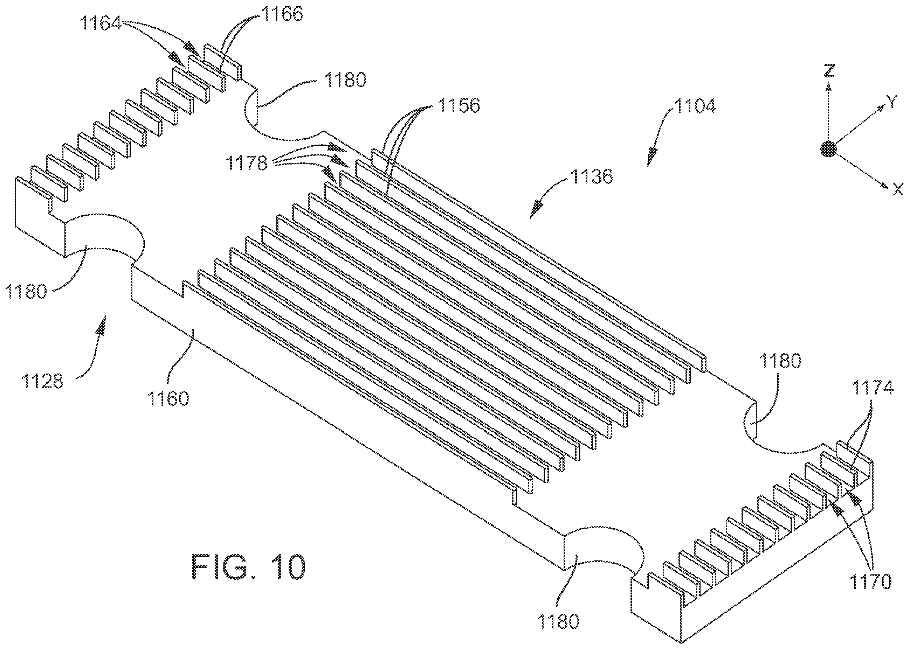

Figure 9 is a top plan view of another example of a capillary array assembly 1100 according to the present disclosure. As in other embodiments, the capillary array assembly 1100 includes a capillary array window holder 1104 and a plurality of capillaries 108 respectively mounted in a parallel arrangement in capillary channels of the capillary array window holder 1104. Figure 10 is a perspective view of the capillary array window holder 1104 without the capillaries 108. In the illustrated example, twelve capillaries 108 are provided in twelve capillary channels, but the capillary array assembly 1100 may include any number of capillary channels and corresponding number of capillaries 108.

As in other embodiments, the capillary array window holder 1104 (i.e., the body thereof) generally includes a top side 1112 and a bottom side 1116 in the x-y plane, a first end 1120, and a second end 1124 axially opposite to the first end 1120 along the longitudinal axis (x-axis). The capillary array window holder 1104 (i.e., the body thereof) also includes a first end section 1128 terminating at the first end 1120, a second end section 1132 terminating at the second end 1124, and a window section 1136 disposed between the first end section 1112 and the second end section 1116 along the longitudinal axis.

The capillary channels are defined by respective open channels 1178 in the window section 1136. The open channels 1178 are divided by opaque, axially elongated window bars 1156 as described above. In this example, the capillary channels are further defined by first end channels 1164 and second end channels 1170, with each open channel 1178 being disposed axially between a corresponding first end channel 1164 and second end channel 1170. The first end channels 1164 and second end channels 1170 are divided by first end bars 1166 and second end bars 1174, respectively, as described above. The capillary channels are axially discontinuous in that each open channel 1178 is axially spaced from a corresponding first end channel 1164 on one side and a corresponding second end channel 1170 on the other side.

In this example, the capillary array window holder 1104 (i.e., the body thereof) further includes one or more bottom walls 1160 at the bottom side 1116 that underlie (and thereby cover, at the bottom side 1116) the window section 1136, or additionally the first end section 1112 and/or the second end section 1116. The bottom wall(s) may be opaque, i.e., composed of an opaque material as described above. Accordingly, the capillary array assembly 1100 of this example has a same-side excitation/detection configuration, meaning that both excitation light EX can be transmitted to and emission light EM can be transmitted from the window section 1136 at the top side 1112, as described above in conjunction with Figure 1. For this purpose, the top side of the window section 1136, or the entire top side of the capillary array assembly 1100, is open as illustrated. In an example, all or a portion of the capillaries 108 may be covered by a top wall or cover (not shown), which may be configured to protect and/or assist in fixing the positions of the capillaries in the capillary array window holder 1104. At least the portion of such a top wall covering (directly above) the capillary windows 148 is transparent.

As also illustrated in Figures 9 and 10, the capillary array window holder 1104 includes mounting features 1180. In the present example, the mounting features 1180 are located underneath the capillary channels and capillaries 108. In the present example, the mounting features 1180 are semi-circular shaped recesses formed in the body (e.g., the bottom wall 1160) of the capillary array window holder 1104. These mounting features 1180 may be brought into contact with complementarily shaped mounting features (e.g., posts) of an underlying plate or other support structure (not shown). In other embodiments, the mounting features 1180 may have other rounded or polygonal shapes.

Figure 11 is a top perspective view of another example of a capillary array assembly 1300 according to the present disclosure. Figure 12 is an exploded, top perspective view the capillary array assembly 1300. The capillary array assembly 1300 may have many features that are the same as or similar to those of the capillary array assembly 1100 illustrated in Figures 9 and 10. Accordingly, such features are indicated by the same reference numerals in Figures 11 and 12. In one respect, the capillary array assembly 1300 is different in that it has a greater number of capillaries 108 (96 capillaries 108 in the present example). In one example and as illustrated in Figures 11 and 12, the capillary array assembly 1300 has a modular configuration assembled from multiple individual capillary array assemblies 1100 arranged in parallel. Accordingly, the capillary window holder of the capillary array assembly 1300 may be constructed from multiple capillary window holders 1104, which may be configured as described above and illustrated in Figures 9 and 10.

To facilitate the assembly and alignment of the individual capillary array assemblies 1100, the capillary array assembly 1300 may include a bottom plate (or baseplate, or bottom cover) 1302 and a top plate (or top wall, or to cover) 1306. The individual capillary array assemblies 1100 are interposed (sandwiched) between the bottom plate 1302 and the top plate 1306. The bottom plate 1302 includes a plurality of (second) mounting features 1410 configured to engage corresponding (first) mounting features 1180 of the individual capillary array assemblies 1100. In the present example and as best shown in Figure 10, the mounting features 1180 are semi-circular recesses, in which case the mounting features 1410 of the bottom plate 1302 may be cylindrical posts configured (e.g., sized and shaped) to complementarily engage (e.g., fit against) the semi-circular mounting features 1180 of the capillary array assemblies 1100. From Figure 10, it is evident that when two capillary array assemblies 1100 are positioned next to each other (side by side), corresponding adjacent pairs of semi-circular mounting features 1180 will form circular holes in which the post-shaped mounting features 1410 of the bottom plate 1302 fit.

As further shown in Figures 11 and 12, the top plate 1306 may include a transparent section 1314 covering (immediately above) the window section(s) 1136, and opaque sections 1318 covering the first end section(s) 1128 and the second section(s) 1132, respectively, thereby serving as an optical slit. The length of the transparent section 1314 may be coextensive with (equal or substantially equal to) the length of the capillary windows of the capillaries 108 in the window section(s) 1136. The opaque sections 1318 cover the coated portions of the capillaries 108 that are immediately adjacent to the capillary windows, which may be advantageous as described above in conjunction with the example illustrated in Figures 1-6.

To assemble the capillary array assembly 1300, the smaller capillary array assemblies 1100 may be positioned side-by-side onto (or into) the bottom plate 1302, utilizing the mounting features 1410 to properly align and position the capillary array assemblies 1100 relative to each other. Consequently, most of the mounting features 1410 are fitted into holes formed by corresponding pairs of mounting features 1180, while the mounting features 1410 at the transverse ends of the bottom plate 1302 fit into the recess (semicircular space in the present example) of one corresponding mounting feature 1180. The top plate 1306 is then positioned at the top side of the capillary array assemblies 1100. Depending on the embodiment, the top plate 1306 may or may not contact the capillary array assemblies 1100 and/or the bottom plate 1302. Depending on the embodiment, the top plate 1306 may or may not be fastened or attached to the capillary array assemblies 1100 and/or the bottom plate 1302. Fastening or attachment may be done mechanically or by adhesion in any suitable manner.

Any of the capillary array assemblies disclosed herein may be configured to include a bottom plate and/or a top plate similar to the bottom plate 1302 and/or top plate 1306 just described and illustrated in Figures 11 and 12.

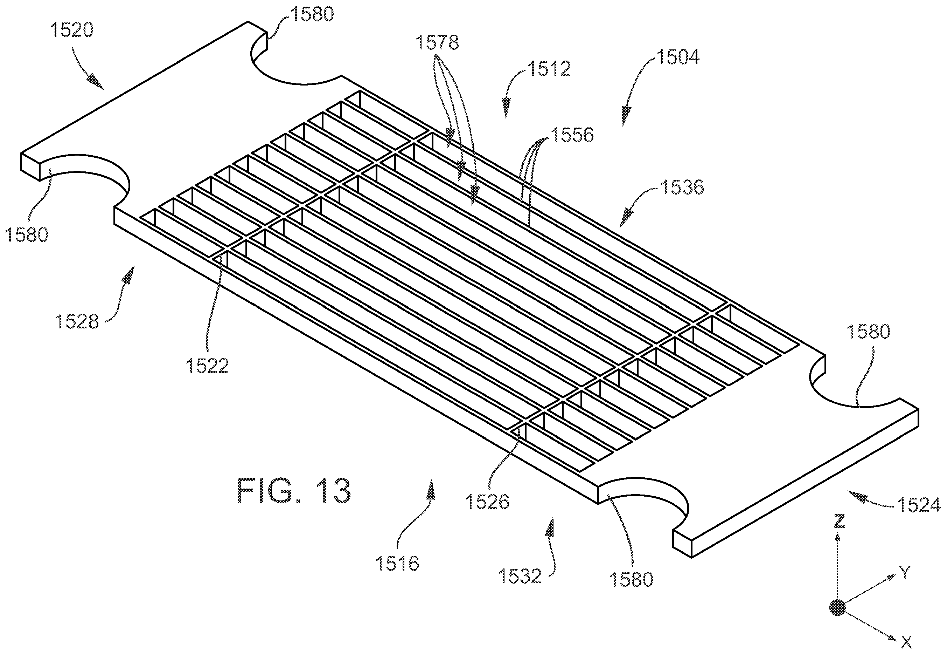

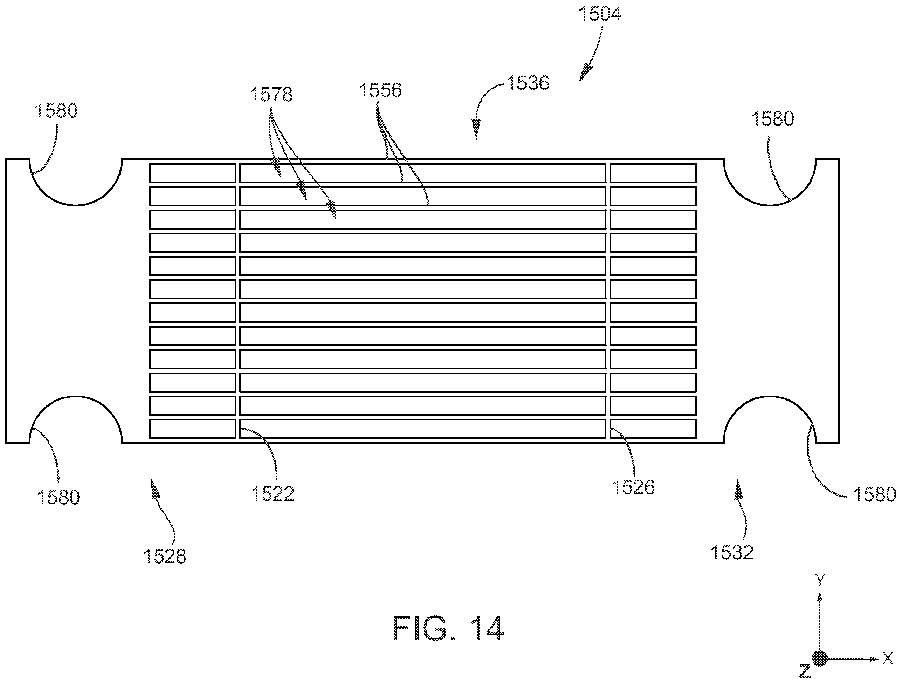

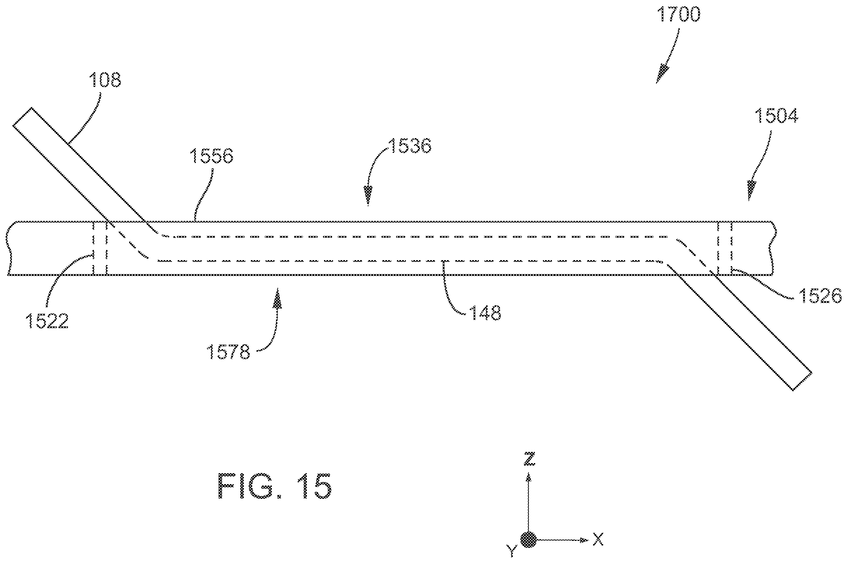

Figure 13 is a top perspective view of another example of a capillary window holder 1504 according to the present disclosure. Figure 14 is a top plan view of the capillary window holder 1504. As in other embodiments, the capillary window holder 1504 includes a plurality of capillary channels configured to hold a plurality of corresponding capillaries 108 (see Figure 15), such that at least the capillary windows 148 of the capillaries 108 are fixed in position in a parallel arrangement in a manner that reduces or prevents cross-talk between adjacent capillary windows 148. In the illustrated example, twelve capillary channels are provided for twelve capillaries 108, but the capillary window holder 1504 may include any number of capillary channels for a corresponding number of capillaries 108.

As in other embodiments, the capillary array window holder 1504 (i.e., the body thereof) generally includes a top side 1512 and a bottom side 1516 in the x-y plane, a first end 1520, and a second end 1524 axially opposite to the first end 1520 along the longitudinal axis (x-axis). The capillary array window holder 1504 (i.e., the body thereof) also includes a window section 1536. The structure of the capillary array window holder 1504 may also be considered as including a first end section 1528 terminating at the first end 1520 and a second end section 1532 terminating at the second end 1524, with the window section 1536 being disposed between the first end section 1512 and the second end section 1516 along the longitudinal axis.

In this example, a portion of the capillary array window holder 1504 is configured as a grid of bars or ribs. The grid includes a plurality of longitudinal bars arranged in parallel along the longitudinal axis and spaced apart from each other along the transverse axis, and at least two transverse bars (e.g., a first transverse bar 1522 and a second transverse bar 1526) running along the transverse axis and spaced apart from each other along the longitudinal axis. The transverse bars 1522 and 1526 partition each longitudinal bar into an axially elongated window bar 1556 disposed axially between a corresponding first end bar 1566 and a second end bar 1574. Depending on the embodiment, the transverse bars 1522 and 1526 may also be needed to provide structural support for the longitudinal bars, and/or may simplify the manufacturing process of the capillary array window holder 1504.

The transverse bars 1522 and 1526 define the axial ends of the window section 1536. Consequently, as in other embodiments, the capillary channels are defined by respective open channels 1578 in the window section 1536, and the open channels 1578 are divided by the axially elongated window bars 1556. At least the window bars 1556 (or more conveniently the entire body of the capillary array window holder 1504) are composed of an opaque material to provide the reduction or elimination of capillary cross-talk as described above.

In the present example, the capillary array assembly 1500 has a through-illumination configuration whereby light can be transmitted through the window section 1536 at both the top side 1504 and the bottom side 1516. For this purpose, both the top side 1504 and the bottom side 1516 are open (at least at the window section 1536), as illustrated. That is, the open channels 1578 are covered by neither a top wall nor a bottom wall.

As also illustrated in Figures 13 and 14, the capillary array window holder 1504 may include mounting features 1580 similar to the mounting features 1180 described above in conjunction with Figures 9 and 10. Hence, several capillary array window holders 1504 may be arranged in parallel as the modules or segments of a larger capillary array assembly in a manner similar to the capillary array assembly 1300 described above and illustrated in Figures 11 and 12.

Figure 15 is a longitudinal side view of another example of a capillary array assembly 1700 according to the present disclosure, which includes the capillary array window holder 1504 and a plurality of capillaries 108 positioned in the capillary array window holder 1504. In this example, the capillaries 108 are positioned in the capillary array window holder 1504 such that at least their capillary windows 148 are positioned in a parallel, interdigitated relation with the window bars 1556. Hence, by this configuration, the capillary windows 148 are optically blocked by the window bars 1556 in the transverse directions (perpendicular to the drawing sheet) as in other embodiments disclosed herein. In the illustrated example, this configuration is realized by the capillaries 108 being bent over or under the transverse bars 1522 and 1526 (or over one transverse bar 1552 and under the other transverse bar 1526, in the example specifically illustrated), and the portion of the capillaries 108 containing the capillary windows 148 being fully contained within the corresponding open channels 1578. The capillary array assembly 1700 may include a bottom plate and/or a top plate (not shown) as needed to retain the capillaries 108 in the capillary array window holder 1504 in the manner shown in Figure 15. For example, the bottom plate 1302 and/or the top plate 1306 described above and illustrated in Figures 11 and 12 may be configured (i.e., adapted, modified, etc.) for this purpose.

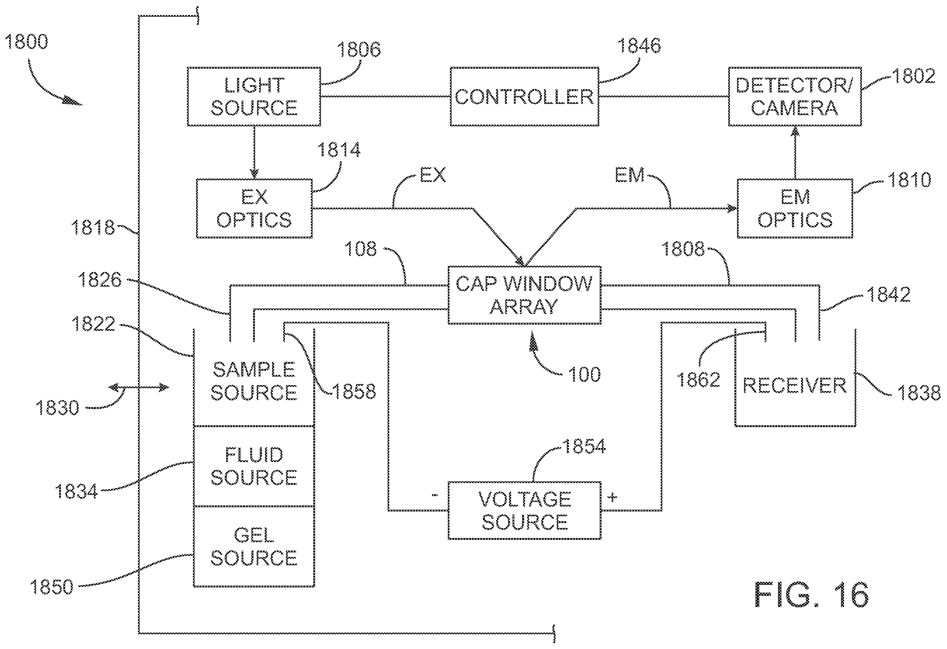

Figure 16 is a schematic view of an example of a sample analysis system (or apparatus, analytical instrument, etc.) 1800 that includes one or more capillary array assemblies 100 (or 700, or 800, etc.) according to any of the examples described herein. The sample analysis system 1800 is configured for performing optical measurements on a samples in the capillaries 108 such as, for example, chemical compounds, biological compounds, biological cells or component(s) thereof, etc. In the context of the present disclosure, the term "optical measurements" encompasses imaging (e.g., microscopic imaging), depending on the type of sample analysis system 1800. In various examples, the optical measurements may be based on fluorescence, absorbance, luminescence (including chemiluminescence or bioluminescence), (UV, Visible, or IR) spectroscopy, Raman scattering, microscopy, etc. Generally, the structure and operation of the various components provided in optical-based sample analysis instruments are understood by persons skilled in the art, and thus are only briefly described herein to facilitate an understanding of the presently disclosed subject matter.

The capillary array assembly 100 is configured to be loaded into an operative position in the sample analysis system 1800, such that the capillary windows supported by the capillary array assembly 100 are in proper optical alignment with an optical system of the sample analysis system 1800. The optical system includes one or more light detectors (or cameras) 1802 configured to receive and measure emission light EM emitted from the exposed (optically readable) section of the capillary array assembly 100. Examples of a light detector 1802 include, but are not limited to, a camera, a photomultiplier tube (PMT), a photodiode (PD), a charge-coupled device (CCD), an active-pixel sensor (APS) such as a complementary metal-oxide-semiconductor (CMOS) device, etc., which are sensitive to the emission wavelengths to be detected.

In some examples (depending on the type of sample analysis system 1800), the optical system further includes one or more light sources 1806 configured to irradiate samples in the capillaries 108 in the exposed section of the capillary array assembly 100, by directing excitation light EX at a selected wavelength or wavelengths. Examples of a light source 1806 include, but are not limited to, a broadband light source (e.g., flash lamp), a light emitting diode (LED), a laser diode (LD), a laser, etc. Multiple light sources 1806 may be provided to enable a user to select a desired excitation wavelength.

The optical system may further include various types of emission optics 1810 configured to transmit the emission light EM from the capillary array assembly 100 to the light detector 1804, or additionally excitation optics 1814 configured to transmit the excitation light EX from the light source 1806 to the capillary array assembly 100. Examples of emission optics 1810 or excitation optics 1814 include, but are not limited to (and as needed and as appreciated by persons skilled in the art), lenses, read heads, apertures, optical filters, light guides, mirrors, beam splitters, beam steering devices, monochromators, diffraction gratings, prisms, optical path switches, etc.

The capillary array assembly 100 and the optical system are disposed inside an instrument console (or apparatus housing, enclosure, etc.) 1818 that is configured to prevent stray light from reaching the capillaries 108. The instrument console 1818 also provides an enclosed environment for enabling environmental control (e.g., temperature control) of the console interior as needed. The instrument console 1818 may also enclose various other components of the sample analysis system 1800 described herein. The instrument console 1818 may include one or more panels, doors, drawers, etc., for loading/removing the capillary array assembly 100 and other portable/replaceable components, for providing access to interior regions and components of the sample analysis system 1800, etc.

In an example, the sample analysis system 1800 includes a sample source 1822 positioned upstream of the capillary array assembly 100. Generally, the sample source 1822 is any component or group of components from which a sample can be introduced into the respective capillaries 108, or configured to provide the samples that are to be loaded into the respective capillaries 108. For this purpose, an inlet end 1826 of each capillary 108 may be in fluid communication (flow communication) with the sample source 1822, either directly or via other fluidic components (e.g., tubes, fittings, valves, etc.). In an example, one or more components of the sample source 1822 may be movable into and out from the instrument console 1818 (via a door, drawer, etc.) in a manual or (semi)automated manner, as indicated by an arrow 1830 in Figure 16. In an example, the sample source 1822 may be or include one or more containers configured to hold the samples, such as multi-well plates (e.g., microtiter plates), tubes, vials, cuvettes, etc. Each well (or other type of container) may contain an individual sample and be in fluid communication with a corresponding one of the capillaries 108. Each sample may be the same or different from the other samples, for example in terms of composition and/or state of conditioning or preparation. In an example, the samples supplied by the sample source 1822 may originate from another analytical instrument (e.g., an LC or GC instrument, etc.), which in some cases may be located upstream of the sample analysis system 1800 and fluidly coupled to the sample source 1822.

In another example, the samples may be preloaded in the capillaries 108 prior to installing the capillary array assembly 100 into the sample analysis system 1800 and carrying out analyses. In this case, all or part of the sample source 1822 may not be needed.

In an example, the sample analysis system 1800 further includes a fluid source 1834. The fluid source 1834 may represent one or more fluid sources configured to supply one or more types of fluids (e.g., solvents, buffer solutions, wash/rinse solutions, reagent solutions, carrier gas, etc.) to the capillaries 108, depending on the type of sample analysis system 1800. The inlet ends 1826 of the capillaries 108 may be selectively placed in fluid communication with the sample source 1822 and the fluid source 1834 in a manual or (semi)automated manner, depending on the type of sample analysis system 1800.

In an example that involves fluid flow through the capillaries 108, the sample analysis system 1800 further includes a receiver 1838 positioned downstream from the capillary array assembly 100. Generally, the receiver 1838 is any appropriately configured destination site for receiving samples after analysis is performed at the capillary array assembly 100, and any other materials flowing through the capillaries 108. For this purpose, an outlet end 1842 of each capillary 108 may be in fluid communication with the receiver 1838, either directly or via other fluidic components (e.g., tubes, fittings, valves, etc.). In an example, the receiver 1838 may be or include one or more containers (e.g., a waste reservoir) configured to collect the samples or other materials from the capillaries 108. In an example, the samples received by the receiver 1838 may be subsequently introduced to another analytical instrument (e.g., an LC or GC instrument, a mass spectrometer, an ion mobility spectrometer, etc.), which in some cases may be located downstream from the sample analysis system 1800 and fluidly coupled to the receiver 1838.

In an example, the sample analysis system 1800 further includes a system controller 1846. The system controller 1846 generally represents one or more electronics-based (e.g., computing) devices or modules that include various types of hardware (e.g., electronics-based processors, memories, non-transitory computer-readable media, etc.), firmware (e.g., integrated circuits or ICs), and/or software configured to perform various functions needed for operating the type of sample analysis system 1800 provided. The system controller 1846 may be embodied as one or more types of hardware such as circuit boards. The system controller 1846 may include data acquisition circuitry (DAC) configured to receive and process signals outputted from the light detector 1802, and produce user-interpretable data therefrom that represent the results of the sample analysis. The system controller 1846 may also be taken as representing devices configured to control, monitor, and synchronize the operation of various components of the sample analysis system 1800, such as the light detector 1802, emission optics 1810, light source 1806, excitation optics 1814, sample source 1822, fluid source 1834, and receiver 1838. The system controller 1846 may also be taken as representing user input and output devices such as keyboards, display monitors, printers, graphical user interfaces (GUIs), etc. The system controller 1846 may include an operating system (e.g., Microsoft Windows^{®} software) for controlling and managing various functions of the system controller 1846. In an example, the system controller 1846 is configured to control or perform all or part of any of the methods disclosed herein. For all such purposes, the system controller 1846 may communicate with the above-noted components via wired or wireless communication links that enable the transmission of signals (e.g., the sending of control signals, the receiving of measurement or feedback signals, etc.).

An example of a general method for analyzing samples, in particular entailing the use of the capillary array assembly 100, will now be described. The capillary array assembly 100 containing the samples is provided. In the present example, providing the capillary array assembly 100 entails loading the capillary array assembly 100 into an operating position in the sample analysis system 1800 to place the capillary array assembly 100 in proper optical alignment with the optical system of the sample analysis system 1800. In methods involving fluid flow through the capillaries 108, providing the capillary array assembly 100 also entails placing the capillaries 108 in fluid communication with the sample source 1822 (or the fluid source 1834, as needed) and the receiver 1838. In some examples of the method, providing the capillary array assembly 100 also entails introducing the samples into the respective capillaries 108, by flowing the samples from the sample source 1822 into the capillaries 108 until the samples are positioned in the capillary windows and therefore accessible by the optical system. Depending on the type of sample analysis being performed, the samples may be subjected to various types of preparation or conditioning (incubation, mixing, homogenization, centrifuging, buffering, reagent addition, etc.) prior to being positioned in the capillary windows, as appreciated by persons skilled in the art.

After providing capillary array assembly 100 as just described, the method includes making an optical measurement of the samples detectable at (e.g., located in) the sample windows to acquire optical data from one or more analytes of the samples. In a typical example, making an optical measurement entails irradiating the samples with excitation light EX, and collecting the resulting emission light EM emitted from the samples in response to the irradiation. In the present example, the optical system of the sample analysis system 1800 described above is operated to make the optical measurement. In some examples, the excitation light EX induces a fluorescent response in one or more analytes of the samples, and the optical measurement relates to measuring the intensity of the fluorescent light to quantify (e.g., determine the concentration of) the analyte(s), or additionally to produce images of the samples that include the fluorescing analyte(s). In other examples, the excitation light EX is utilized to illuminate the samples without necessarily inducing fluorescence, and the emission light EM is utilized to measure absorbance of the samples to quantify the analyte(s), or additionally to produce images of the samples.

In other examples, making an optical measurement does not require irradiating the samples with excitation light EX. For example, the sample source 1822 or the fluid source 1834 may be configured to add a reagent to the sample that induces luminescence, such as flash luminescence or glow luminescence, as appreciated by persons skilled in the art. As further examples, the sample source 1822 or the fluid source 1834 may be configured to add labels to the samples, such as stable labels or radiolabels, depending on the type of optical measurement being made.

In all such cases, the emission optics 1810 of the optical system of the sample analysis system 1800 may be operated to collect the emission light EM from the sample and direct the emission light EM to the light detector 1802. The emission light EM may be detected either on the same side of the capillary array assembly 100 at which the excitation light EX is incident (e.g., the top side), or on the opposite side (e.g., excitation is done on the top side while detection is done on the bottom side). The light detector 1802 then converts the emission light EM into electrical signals (detection or measurement signals) and transmits the electrical signals to signal processing circuitry, such as the data acquisition circuitry of the system controller 1846, described above.

Referring to Figure 16, in one non-exclusive example, the sample analysis system 1800 is configured as a capillary electrophoresis (CE) system. In this case, the capillaries 108 contain an electrophoretic separation medium (i.e., an analytical separation medium formulated for CE) at least in the location of the capillary windows. In the present example, the electrophoretic separation medium is an electrophoretic polymer gel, which may be a polymer formulated for CE. In the present example, the sample analysis system 1800 includes an analytical separation medium source 1850 from which an analytical separation medium can be introduced into the respective capillaries 108. In the specific example, the analytical separation medium source 1850 is an electrophoretic separation medium source or more specifically an electrophoretic gel source. The electrophoretic gel source may represent one or more containers (e.g., reservoirs, bottles, etc.) and components (e.g., pumps, valves, etc.) configured to supply the gel to the capillary windows by flowing the gel through the capillaries 108 to a waste receptacle of the receiver 1838. The inlet ends 1826 of the capillaries 108 may be selectively placed in fluid communication with the analytical separation medium source 1850 (and switched among the analytical separation medium source 1850, the sample source 1822, and the fluid source 1834 as needed) in a manual or (semi)automated manner, depending on the embodiment of sample analysis system 1800. In other examples, the capillaries 108 are preloaded with the gel (or other type of analytical separation medium), in which case the analytical separation medium source 1850 is not required. In another example, another type of analytical separation medium may be utilized such as, for example, a chromatographic separation medium.

In the example of a CE system, the sample analysis system 1800 further includes a high-voltage (HV) power supply configured to apply a potential difference across the lengths of each of the capillaries 108, i.e., between their input ends 1826 and output ends 1842. The HV voltage supply includes a voltage source 1854 electrically coupled to one or more input electrodes 1858 (e.g., cathodes) and one or more output electrodes 1862 (e.g., anodes) via wiring. For example, the input electrode(s) 1858 may be immersed in a cathode reservoir of the sample source 1822 so as to be electrically coupled to the capillaries 108 (in particular, the samples and accompanying fluid in the capillaries 108) via an electrolytic solution in the cathode reservoir. As a further example, one pair of a capillary inlet end 1826 and an input electrode 1858 may be immersed in each well of a multi-well plate from which respective samples are supplied. Similarly, the output electrode(s) 1862 may be immersed in an anode reservoir of the receiver 1838 so as to be electrically coupled to the capillaries 108 (in particular, the samples and accompanying fluid in the capillaries 108) via an electrolytic solution in the anode reservoir. The voltage source 1854 represents the various components needed for applying a potential difference having desired operating parameters (amplitude/magnitude, frequency, waveform(s), pulse rate, etc.) for implementing CE, such as a waveform generator, amplifier, etc., as appreciated by persons skilled in the art.

Another example of a method for analyzing samples, specifically in the context of CE, will now be described. The method may generally include the steps of providing the capillary array assembly 100 and subsequently making an optical measurement of the samples in the sample windows to acquire optical data from one or more analytes of the samples. If the capillaries 108 are not preloaded with the electrophoretic separation medium, the method includes providing the electrophoretic separation medium in the capillaries 108, before providing the samples in the capillaries 108 and before making the optical measurement as described above. In the present example, the method further includes, before and/or during making the optical measurement, applying a potential difference across the capillaries 108 (typically simultaneously, in parallel). The potential difference induces different analytes to migrate through the electrophoretic separation medium at different speeds dependent on their differing sizes and/or electrical charge state, according to mechanisms generally understood by persons skilled in the art. In this way, the different analytes become separated from each other, thereby facilitating the optical measurement of one or more target analytes of interest in the samples.

It will be understood that terms such as "communicate" and "in . . . communication with" (for example, a first component "communicates with" or "is in communication with" a second component) are used herein to indicate a structural, functional, mechanical, electrical, signal, optical, magnetic, electromagnetic, ionic or fluidic relationship between two or more components or elements. As such, the fact that one component is said to communicate with a second component is not intended to exclude the possibility that additional components may be present between, and/or operatively associated or engaged with, the first and second components.

It will be understood that various aspects or details of the invention may be changed without departing from the scope of the invention. Furthermore, the foregoing description is for the purpose of illustration only, and not for the purpose of limitation-the invention being defined by the claims.

## Claims

1. A capillary array window holder (104, 1104, 1504), comprising:
a first end section (128, 1128, 1528);
a second end section (132, 1132, 1532);
a window section (136, 836, 1136, 1536) disposed between the first end section (128, 1128, 1528) and the second end section (132, 1132, 1532) along a longitudinal axis, and comprising a plurality of window bars (156, 856, 1156, 1556) extending along the longitudinal axis and spaced from each other along a transverse axis orthogonal to the longitudinal axis, wherein:
the window bars (156, 856, 1156, 1556) define a plurality of parallel open channels (678, 878, 1178, 1578) configured to respectively contain a plurality of capillaries (108 1808), and are composed of an opaque material such that the window bars (156, 856, 1156, 1556) block line of sight along the transverse axis between adjacent open channels (678, 878, 1178, 1578); and
the open channels (678, 878, 1178, 1578) are exposed on a top side (112, 1112, 1512) of the window section (136, 836, 1136, 1536) to allow transmission of light to and from the open channels (678, 878, 1178, 1578) at the top side (112, 1112, 1512), **characterized in that**
the first end section (128, 1128, 1528) comprises a plurality of first end bars (466, 1166, 1566) defining a plurality of first end channels (464, 1164) aligned with the open channels (678, 878, 1178, 1578) along the longitudinal axis, and the second end section (132, 1132, 1532) comprises a plurality of second end bars (574, 1174, 1574) defining a plurality of second end channels (570, 1170) aligned with the open channels (678, 878, 1178, 1578) along the longitudinal axis, and **in that**
the first end section (128, 1128, 1528) comprises a first top wall (140) covering the first end channels (464, 1164) on the top side (112, 1112, 1512), and the second end section (132, 1132, 1532) comprises a second top wall (144) covering the second end channels (570, 1170) on the top side (112, 1112, 1512).

2. The capillary array window holder (104, 1104, 1504) of claim 1,
wherein at least one of the first end section (128, 1128, 1528) or the second end section (132, 1132, 1532) comprises a mounting feature (180, 182) configured to engage a structure for mounting the capillary array window holder (104, 1104, 1504) to the structure, or
wherein at least one of the first end section (128, 1128, 1528) or the second end section (132, 1132, 1532) comprises a mounting feature (180, 182) configured to engage a structure for mounting the capillary array window holder (104, 1104, 1504) to the structure, the window section (136, 836, 1136, 1536) lies in a capillary plane, and the mounting feature comprises a plate lying in a mounting plane spaced from the capillary plane along an elevational axis orthogonal to the longitudinal axis and to the transverse axis.

3. The capillary array window holder (104, 1104, 1504) of any one of claims 1 to 2, wherein the window section (136, 836, 1136, 1536) comprises a bottom wall (260, 1160) located on a bottom side (116, 1116, 1516) of the capillary array window holder (104, 1104, 1504) opposite to the top side (112, 1112, 1512), and the bottom wall (260, 1160) covers the open channels (678, 878, 1178, 1578) on the bottom side (116, 1116, 1516).

4. The capillary array window holder (104, 1104, 1504) of any one of claims 1 to 3, wherein the open channels (678, 878, 1178, 1578) are exposed to a bottom side (116, 1116, 1516) of the capillary array window holder (104, 1104, 1504) opposite to the top side (112, 1112, 1512), such that the window section (136, 836, 1136, 1536) allows transmission of light from the top side (112, 1112, 1512), through the open channels (678, 878, 1178, 1578), and to the bottom side (116, 1116, 1516).

5. The capillary array window holder (104, 1104, 1504) of any one of claims 1 to 4, wherein each window bar (156, 856, 1156, 1556) has a transverse cross-section in a transverse plane orthogonal to the longitudinal axis, the transverse cross-section is defined by a bar width and a bar height, and the transverse cross-section has a ratio of bar height to bar width in a range from 1 to 10 and/or the bar height is in a range from 100 µm to 400 µm.

6. The capillary array window holder (104, 1104, 1504) of any one of claims 1 to 5, wherein each open channel (678, 878, 1178, 1578) has a transverse cross-section in a transverse plane orthogonal to the longitudinal axis, and the transverse cross-section is rectilinear.

7. The capillary array window holder (104, 1104, 1504) of any one of claims 1 to 6, wherein the opaque material is opaque to light propagating at wavelengths in a range from 190 nm to 800 nm, and/or wherein the window bars (156, 856, 1156, 1556) are composed of a material selected from the group consisting of: metals; aluminum; nickel; copper; metal alloys; silicon; ceramics; glasses; polymers; plastics; polyoxymethylene, "POM"; liquid-crystal polymer, "LCP"; polyacrylamide, "PA"; polycarbonate, "PC"; poly(methyl methacrylate), "PMMA"; polyether ether ketone, "PEEK"; and polyethylene, "PE".

8. A capillary array assembly (100, 700, 800, 1100, 1300, 1700), comprising:
the capillary array window holder (104, 1104, 1504) of any one of claims 1 to 7; and
the plurality of capillaries (108 1808), each capillary (108 1808) disposed in a respective one of the capillary channels such that windows of each capillary (108 1808) are respectively positioned in the open channels (678, 878, 1178, 1578), wherein the capillary array assembly (100, 700, 800, 1100, 1300, 1700) preferably comprises a plurality of capillary array window holders (104, 1104, 1504) according to any one of claims 1 to 7, arranged side by side along the transverse axis, and each capillary (108 1808) is disposed in a respective one of the capillary channels in each capillary array window holder (104, 1104, 1504).

9. The capillary array assembly (100, 700, 800, 1100, 1300, 1700) of claim 8, wherein the window bars (156, 856, 1156, 1556) each have a bar height in a transverse plane orthogonal to the longitudinal axis, and the bar height is equal to or greater than an outer diameter of the capillaries in the window section (136, 836, 1136, 1536).

10. The capillary array assembly (100, 700, 800, 1100, 1300, 1700) of claim 8 or 9, comprising a top plate (1306) disposed on or above the capillaries (108 1808) on the top side (112, 1112, 1512), wherein at least a portion of the top plate (1306) covering the window section (136, 836, 1136, 1536) is transparent.

11. A sample analysis system (1800), comprising:
the capillary array assembly (100, 700, 800, 1100, 1300, 1700) of any one of claims 8 to 10; and
a light detector (1802) positioned in optical alignment with the open channels (678, 878, 1178, 1578), and optionally further comprising at least one of:
a light source (1806) positioned in optical alignment with the open channels (678, 878, 1178, 1578);
a sample source (1822) from which a sample can be introduced into the capillaries (108 1808);
a voltage source (1854) electrically communicating with the capillaries (108 1808), and configured to apply a potential difference across the capillaries (108 1808) effective for performing capillary electrophoresis on samples in the capillaries (108 1808);
an analytical separation medium source (1850) from which an analytical separation medium can be introduced into the capillaries (108 1808);
an analytical separation medium source (1850) from which an analytical separation medium can be introduced into the capillaries (108 1808), wherein the analytical separation medium comprises an electrophoretic separation medium.

12. A method for analyzing a sample, the method comprising:
providing a capillary array assembly (100, 700, 800, 1100, 1300, 1700) according to any one of claims 8 to 10; and
making an optical measurement of samples respectively detectable at the windows to acquire optical data from one or more analytes of the samples.

13. The method of claim 12, wherein the making of the optical measurement comprises one of:
detecting emission light emitted from the windows, wherein the detecting is done on the top side (112, 1112, 1512);
detecting emission light emitted from the windows, wherein the detecting is done on a bottom side (116, 1116, 1516) of the capillary array assembly (100, 700, 800, 1100, 1300, 1700) opposite to the top side (112, 1112, 1512);
irradiating the samples with excitation light and detecting emission light emitted from the windows, wherein the irradiating and the detecting are both done on the top side (112, 1112, 1512);
irradiating the samples with excitation light and detecting emission light emitted from the windows, wherein the irradiating is done on the top side (112, 1112, 1512), and the detecting is done on a bottom side (116, 1116, 1516) of the capillary array assembly opposite (100, 700, 800, 1100, 1300, 1700) to the top side (112, 1112, 1512).

14. The method of claim 12 or 13, comprising at least one of:
flowing the samples into the capillaries (108 1808);
before and/or during the making of the optical measurement, analytically separating the samples in each capillary (108 1808);
before and/or during the making of the optical measurement, analytically separating the samples in each capillary (108 1808), wherein the analytically separating of the samples comprises performing capillary electrophoresis on the samples;
flowing an analytical separation medium into the capillaries (108 1808);
flowing an analytical separation medium into the capillaries (108 1808), wherein the analytical separation medium comprises an electrophoretic separation medium.

## Patentansprüche

1. Kapillaranordnungsfensterhalter (104, 1104, 1504), der Folgendes umfasst:
einen ersten Endabschnitt (128, 1128, 1528);
einen zweiten Endabschnitt (132, 1132, 1532);
einen Fensterabschnitt (136, 836, 1136, 1536), der entlang einer longitudinalen Achse zwischen dem ersten Endabschnitt (128, 1128, 1528) und dem zweiten Endabschnitt (132, 1132, 1532) angeordnet ist und eine Vielzahl von Fensterstäben (156, 856, 1156, 1556), die sich entlang der longitudinalen Achse erstrecken und entlang einer zur longitudinalen Achse orthogonalen transversalen Achse voneinander beabstandet sind, wobei:
die Fensterstäbe (156, 856, 1156, 1556) eine Vielzahl paralleler offener Kanäle (678, 878, 1178, 1578) definieren, die dazu konfiguriert sind, eine Vielzahl von Kapillaren (108 1808) zu enthalten, und aus einem undurchsichtigen Material zusammengesetzt sind, sodass die Fensterstäbe (156, 856, 1156, 1556) die Sichtlinie entlang der transversalen Achse zwischen benachbarten offenen Kanälen (678, 878, 1178, 1578) blockieren; und
die offenen Kanäle (678, 878, 1178, 1578) an einer Oberseite (112, 1112, 1512) des Fensterabschnitts (136, 836, 1136, 1536) freigelegt sind, um den Lichtdurchgang zu und von den offenen Kanälen (678, 878, 1178, 1578) an der Oberseite (112, 1112, 1512) zu ermöglichen, **dadurch gekennzeichnet, dass**
der erste Endabschnitt (128, 1128, 1528) eine Vielzahl von ersten Endstäben (466, 1166, 1566) umfasst, die eine Vielzahl von ersten Endkanälen (464, 1164) definieren, die entlang der longitudinalen Achse mit den offenen Kanälen (678, 878, 1178, 1578) ausgerichtet sind, und der zweite Endabschnitt (132, 1132, 1532) eine Vielzahl von zweiten Endstäben (574, 1174, 1574) umfasst, die eine Vielzahl von zweiten Endkanälen (570, 1170) definieren, die entlang der longitudinalen Achse mit den offenen Kanäle (678, 878, 1178, 1578) ausgerichtet sind, und **dadurch**, dass
der erste Endabschnitt (128, 1128, 1528) eine erste obere Wand (140) umfasst, die die ersten Endkanäle (464, 1164) an der Oberseite (112, 1112, 1512) abdeckt, und der zweite Endabschnitt (132, 1132, 1532) eine zweite obere Wand (144) umfasst, die die zweiten Endkanäle (570, 1170) an der Oberseite (112, 1112, 1512) abdeckt.

2. Kapillaranordnungsfensterhalter (104, 1104,1504) nach Anspruch 1,
wobei mindestens einer von dem ersten Endabschnitt (128, 1128, 1528) oder dem zweiten Endabschnitt (132, 1132, 1532) ein Montagemerkmal (180, 182) umfasst, das dazu konfiguriert ist, in eine Struktur zum Montieren des Kapillaranordnungsfensterhalters (104, 1104, 1504) an der Struktur einzugreifen, oder
wobei mindestens einer von dem ersten Endabschnitt (128, 1128, 1528) oder dem zweiten Endabschnitt (132, 1132, 1532) ein Montagemerkmal (180, 182) umfasst, das dazu konfiguriert ist, in eine Struktur zum Montieren des Kapillaranordnungsfensterhalters (104, 1104, 1504) an der Struktur einzugreifen, wobei der Fensterabschnitt (136, 836, 1136, 1536) in einer Kapillarebene liegt, und das Montagemerkmal eine Platte umfasst, die in einer Montageebene liegt, die von der Kapillarebene entlang einer zu der longitudinalen Achse und zu der transversalen Achse orthogonalen Höhenachse beabstandet ist.

3. Kapillaranordnungsfensterhalter (104, 1104, 1504) nach einem der Ansprüche 1 bis 2, wobei der Fensterabschnitt (136, 836, 1136, 1536) eine Bodenwand (260, 1160) umfasst, die sich auf einer Unterseite (116, 1116, 1516) des Kapillaranordnungsfensterhalters (104, 1104, 1504) gegenüber der Oberseite (112, 1112, 1512) befindet, und die Bodenwand (260, 1160) die offenen Kanäle (678, 878, 1178, 1578) auf der Unterseite (116, 1116, 1516) abdeckt.

4. Kapillaranordnungsfensterhalter (104, 1104, 1504) nach einem der Ansprüche 1 bis 3, wobei die offenen Kanäle (678, 878, 1178, 1578) zu einer Unterseite (116, 1116, 1516) des Kapillaranordnungsfensterhalters (104, 1104, 1504) gegenüber der Oberseite (112, 1112, 1512) freigelegt sind, so dass der Fensterabschnitt (136, 836, 1136, 1536) den Lichtdurchgang von der Oberseite (112, 1112, 1512) durch die offenen Kanäle (678, 878, 1178, 1578), und zu der Unterseite (116, 1116, 1516) ermöglicht.

5. Kapillaranordnungsfensterhalter (104, 1104, 1504) nach einem der Ansprüche 1 bis 4, wobei jeder Fensterstab (156, 856, 1156, 1556) einen transversalen Querschnitt in einer zu der longitudinalen Achse orthogonalen Querebene aufweist, wobei der transversale Querschnitt durch eine Stabbreite und eine Stabhöhe definiert ist und der transversale Querschnitt ein Verhältnis von Stabhöhe zu Stabbreite in einem Bereich von 1 bis 10 aufweist und/oder die Stabhöhe in einem Bereich von 100 µm bis 400 µm liegt.

6. Kapillaranordnungsfensterhalter (104, 1104, 1504) nach einem der Ansprüche 1 bis 5, wobei jeder offene Kanal (678, 878, 1178, 1578) einen transversalen Querschnitt in einer zu der longitudinalen Achse orthogonalen transversalen Ebene aufweist und der transversale Querschnitt geradlinig ist.

7. Kapillaranordnungsfensterhalter (104, 1104, 1504) nach einem der Ansprüche 1 bis 6, wobei das undurchsichtige Material für Licht undurchlässig ist, das sich bei Wellenlängen in einem Bereich von 190 nm bis 800 nm ausbreitet, und/oder wobei die Fensterstäbe (156, 856, 1156, 1556) aus einem Material zusammengesetzt sind, das aus der Gruppe ausgewählt ist, die aus Folgendem besteht: Metallen; Aluminium; Nickel; Kupfer; Metalllegierungen; Silizium; Keramiken; Gläsern; Polymeren; Kunststoffen; Polyoxymethylen, "POM"; Flüssigkristallpolymer, "LCP"; Polyacrylamid, "PA"; Polycarbonat, "PC"; Poly(methylmethacrylat), "PMMA"; Polyetheretherketon, "PEEK"; und Polyethylen, "PE".

8. Kapillaranordnungseinheit (100, 700, 800, 1100, 1300, 1700), die Folgendes umfasst:
den Kapillaranordnungsfensterhalter (104, 1104,1504) nach einem der Ansprüche 1 bis 7; und
die Vielzahl von Kapillaren (108 1808), wobei jede Kapillare (108 1808) in einem jeweiligen der Kapillarkanäle so angeordnet ist, dass die Fenster jeder Kapillare (108 1808) jeweils in den offenen Kanälen (678, 878, 1178, 1578) positioniert sind, wobei die Kapillaranordnungseinheit (100, 700, 800, 1100, 1300, 1700) vorzugsweise eine Vielzahl von Kapillaranordnungsfensterhaltern (104, 1104, 1504) nach einem der Ansprüche 1 bis 7 umfasst, die nebeneinander entlang der transversalen Achse eingerichtet sind, und jede Kapillare (108 1808) in einem jeweiligen der Kapillarkanäle in jedem Kapillaranordnungsfensterhalter (104, 1104, 1504) angeordnet ist.

9. Kapillaranordnungseinheit (100, 700, 800, 1100, 1300, 1700) nach Anspruch 8, wobei die Fensterstäbe (156, 856, 1156, 1556) jeweils eine Stabhöhe in einer zu der longitudinalen Achse orthogonalen transversalen Ebene aufweisen und die Stabhöhe gleich oder größer als ein Außendurchmesser der Kapillaren in dem Fensterabschnitt (136, 836, 1136, 1536) ist.

10. Kapillaranordnungseinheit (100, 700, 800, 1100, 1300, 1700) nach Anspruch 8 oder 9, umfassend eine Deckplatte (1306), die auf oder über den Kapillaren (108, 1808) auf der Oberseite (112, 1112, 1512) angeordnet ist, wobei mindestens ein Teil der Deckplatte (1306), der den Fensterabschnitt (136, 836, 1136, 1536) abdeckt, transparent ist.

11. Probenanalysesystem (1800), das Folgendes umfasst:
die Kapillaranordnungseinheit (100) 700, 800, 1100, 1300, 1700) nach einem der Ansprüche 8 bis 10; und
einen Lichtdetektor (1802), der in optischer Ausrichtung zu den offenen Kanälen (678, 878, 1178, 1578) angeordnet ist, und optional des Weiteren umfassend mindestens eines aus Folgendem:
eine Lichtquelle (1806), die in optischer Ausrichtung zu den offenen Kanälen (678, 878, 1178, 1578) angeordnet ist;
eine Probenquelle (1822), aus der eine Probe in die Kapillaren (108 1808) eingeführt werden kann;
eine Spannungsquelle (1854), die elektrisch mit den Kapillaren (108 1808) in Verbindung steht und dazu konfiguriert ist, eine Potentialdifferenz an die Kapillaren (108 1808) anzulegen, die zur Durchführung einer Kapillarelektrophorese an Proben in den Kapillaren (108 1808) wirkfähig ist;
eine Quelle (1850) für ein analytisches Trennmedium, aus der ein analytisches Trennmedium in die Kapillaren (108 1808) eingeführt werden kann;
eine Quelle (1850) für ein analytisches Trennmedium, aus der ein analytisches Trennmedium in die Kapillaren (108 1808) eingeführt werden kann, wobei das analytische Trennmedium ein elektrophoretisches Trennmedium umfasst.

12. Verfahren zum Analysieren einer Probe, wobei das Verfahren Folgendes umfasst:
Bereitstellen einer Kapillaranordnungseinheit (100) 700, 800, 1100, 1300, 1700) nach einem der Ansprüche 8 bis 10; und
Vornehmen einer optischen Messung an Proben, die jeweils an den Fenstern detektierbar sind, um optische Daten von einem oder mehreren Analyten der Proben zu erfassen.

13. Verfahren nach Anspruch 12, wobei das Vornehmen einer optischen Messung eines aus Folgendem umfasst:
Detektieren von aus den Fenstern emittiertem Emissionslicht, wobei das Detektieren an der Oberseite (112, 1112, 1512) erfolgt;
Erfassen von aus den Fenstern emittiertem Emissionslicht, wobei das Detektieren an einer Unterseite (116, 1116, 1516) der Kapillaranordnungseinheit (100, 700, 800, 1100, 1300, 1700) gegenüber der Oberseite (112, 1112, 1512) erfolgt;
Bestrahlen der Proben mit Anregungslicht und Detektieren des aus den Fenstern emittierten Emissionslichts, wobei sowohl das Bestrahlen als auch das Detektieren an der Oberseite (112, 1112, 1512) erfolgen;
Bestrahlen der Proben mit Anregungslicht und Detektieren des aus den Fenstern emittierten Emissionslichts, wobei das Bestrahlen an der Oberseite (112, 1112, 1512) erfolgt und das Detektieren an einer Unterseite (116, 1116, 1516) der Kapillaranordnungseinheit (100, 700, 800, 1100, 1300, 1700) gegenüber der Oberseite (112, 1112, 1512) erfolgt.

14. Verfahren nach Anspruch 12 oder 13, umfassend mindestens eines aus Folgendem:
Einleiten der Proben in die Kapillaren (108 1808);
vor und/oder während des Vornehmes der optischen Messung, analytisches Trennen der Proben in jeder Kapillare (108 1808);
vor und/oder während des Vornehmes der optischen Messung, analytisches Trennen der Proben in jeder Kapillare (108 1808), wobei das analytische Trennen der Proben das Durchführen einer Kapillarelektrophorese an den Proben umfasst;
Einleiten eines analytischen Trennmediums in die Kapillaren (108 1808);
Einleiten eines analytischen Trennmediums in die Kapillaren (108 1808), wobei das analytische Trennmedium ein elektrophoretisches Trennmedium umfasst.

## Revendications

1. Support pour fenêtre de réseau de capillaires (104, 1104, 1504), comprenant :
une première section d'extrémité (128, 1128, 1528) ;
une seconde section d'extrémité (132, 1132, 1532) ;
une section de fenêtre (136, 836, 1136, 1536) disposée entre la première section d'extrémité (128, 1128, 1528) et la seconde section d'extrémité (132, 1132, 1532) le long d'un axe longitudinal, et comprenant une pluralité de barreaux de fenêtre (156, 856, 1156, 1556) s'étendant le long de l'axe longitudinal et espacés les uns des autres le long d'un axe transversal orthogonal à l'axe longitudinal, dans lequel :
les barreaux de fenêtre (156, 856, 1156, 1556) définissent une pluralité de canaux ouverts parallèles (678, 878, 1178, 1578) configurés pour contenir respectivement une pluralité de capillaires (108, 1808), et sont composés d'un matériau opaque de sorte que les barreaux de fenêtre (156, 856, 1156, 1556) bloquent la ligne de vue le long de l'axe transversal entre des canaux ouverts adjacents (678, 878, 1178, 1578) ; et
les canaux ouverts (678, 878, 1178, 1578) sont exposés sur un côté supérieur (112, 1112, 1512) de la section de fenêtre (136, 836, 1136, 1536) afin de permettre une transmission de lumière vers et depuis les canaux ouverts (678, 878, 1178, 1578) au niveau du côté supérieur (112, 1112, 1512), **caractérisé en ce que**
la première section d'extrémité (128, 1128, 1528) comprend une pluralité de premiers barreaux d'extrémité (466, 1166, 1566) définissant une pluralité de premiers canaux d'extrémité (464, 1164) alignés avec les canaux ouverts (678, 878, 1178, 1578) le long de l'axe longitudinal, et la seconde section d'extrémité (132, 1132, 1532) comprend une pluralité de seconds barreaux d'extrémité (574, 1174, 1574) définissant une pluralité de seconds canaux d'extrémité (570, 1170) alignés avec les canaux ouverts (678, 878, 1178, 1578) le long de l'axe longitudinal, et **en ce que**
la première section d'extrémité (128, 1128, 1528) comprend une première paroi supérieure (140) couvrant les premiers canaux d'extrémité (464, 1164) sur le côté supérieur (112, 1112, 1512), et la seconde section d'extrémité (132, 1132, 1532) comprend une seconde paroi supérieure (144) couvrant les seconds canaux d'extrémité (570, 1170) sur le côté supérieur (112, 1112, 1512).

2. Support pour fenêtre de réseau de capillaires (104, 1104, 1504) selon la revendication 1,
dans lequel au moins une de la première section d'extrémité (128, 1128, 1528) ou de la seconde section d'extrémité (132, 1132, 1532) comprend une caractéristique de montage (180, 182) configurée pour mettre en prise une structure de montage du support pour fenêtre de réseau de capillaires (104, 1104, 1504) sur la structure, ou
dans lequel au moins une de la première section d'extrémité (128, 1128, 1528) ou de la seconde section d'extrémité (132, 1132, 1532) comprend une caractéristique de montage (180, 182) configurée pour mettre en prise une structure de montage du support pour fenêtre de réseau de capillaires (104, 1104, 1504) sur la structure, la section de fenêtre (136, 836, 1136, 1536) se trouve dans un plan de capillaires, et la caractéristique de montage comprend une plaque se trouvant dans un plan de montage espacé du plan de capillaires le long d'un axe d'élévation orthogonal à l'axe longitudinal et à l'axe transversal.

3. Support pour fenêtre de réseau de capillaires (104, 1104, 1504) selon l'une quelconque des revendications 1 à 2, dans lequel la section de fenêtre (136, 836, 1136, 1536) comprend une paroi inférieure (260, 1160) située sur un côté inférieur (116, 1116, 1516) du support pour fenêtre de réseau de capillaires (104, 1104, 1504) opposé au côté supérieur (112, 1112, 1512), et la paroi inférieure (260, 1160) couvre les canaux ouverts (678, 878, 1178, 1578) sur le côté inférieur (116, 1116, 1516).

4. Support pour fenêtre de réseau de capillaires (104, 1104, 1504) selon l'une quelconque des revendications 1 à 3, dans lequel les canaux ouverts (678, 878, 1178, 1578) sont exposés à un côté inférieur (116, 1116, 1516) du support pour fenêtre de réseau de capillaires (104, 1104, 1504) opposé au côté supérieur (112, 1112, 1512), de sorte que la section de fenêtre (136, 836, 1136, 1536) permet une transmission de lumière depuis le côté supérieur (112, 1112, 1512), à travers les canaux ouverts (678, 878, 1178, 1578), et vers le côté inférieur (116, 1116, 1516).

5. Support pour fenêtre de réseau de capillaires (104, 1104, 1504) selon l'une quelconque des revendications 1 à 4, dans lequel chaque barreau de fenêtre (156, 856, 1156, 1556) a une section transversale dans un plan transversal orthogonal à l'axe longitudinal, la section transversale est définie par une largeur de barreau et une hauteur de barreau, et la section transversale a un rapport entre la hauteur de barreau et la largeur de barreau dans une plage de 1 à 10 et/ou la hauteur de barreau se situe dans une plage allant de 100 µm à 400 µm.

6. Support pour fenêtre de réseau de capillaires (104, 1104, 1504) selon l'une quelconque des revendications 1 à 5, dans lequel chaque canal ouvert (678, 878, 1178, 1578) a une section transversale dans un plan transversal orthogonal à l'axe longitudinal, et la section transversale est rectiligne.

7. Support pour fenêtre de réseau de capillaires (104, 1104, 1504) selon l'une quelconque des revendications 1 à 6, dans lequel le matériau opaque est opaque vis-à-vis d'une lumière se propageant à des longueurs d'onde dans une plage allant de 190 nm à 800 nm, et/ou dans lequel les barreaux de fenêtre (156, 856, 1156, 1556) sont composés d'un matériau sélectionné parmi le groupe constitué de : métaux ; aluminium ; nickel ; cuivre ; alliages métalliques ; silicium ; céramiques ; verres ; polymères ; plastiques ; polyoxyméthylène, « POM » ; polymère de cristaux liquides, « LCP » ; polyacrylamide, « PA » ; polycarbonate, « PC » ; poly(méthacrylate de méthyle), « PMMA » ; polyéther éther cétone, « PEEK » ; et polyéthylène, « PE ».

8. Ensemble réseau de capillaires (100, 700, 800, 1100, 1300, 1700), comprenant :
le support pour fenêtre de réseau de capillaires (104, 1104, 1504) selon l'une quelconque des revendications 1 à 7 ; et
la pluralité des capillaires (108, 1808), chaque capillaire (108, 1808) étant disposé dans un canal respectif des canaux capillaires, de sorte que des fenêtres de chaque capillaire (108, 1808) sont respectivement positionnées dans les canaux ouverts (678, 878, 1178, 1578), dans lequel l'ensemble réseau de capillaires (100, 700, 800, 1100, 1300, 1700) comprend de préférence une pluralité de supports pour fenêtre de réseau de capillaires (104, 1104, 1504) selon l'une quelconque des revendications 1 à 7, disposés côte à côte le long de l'axe transversal, et chaque capillaire (108, 1808) est disposé dans un canal respectif des canaux capillaires de chaque support pour fenêtre de réseau de capillaires (104, 1104, 1504).

9. Ensemble réseau de capillaires (100, 700, 800, 1100, 1300, 1700) selon la revendication 8, dans lequel les barreaux de fenêtre (156, 856, 1156, 1556) ont chacun une hauteur de barreau dans un plan transversal orthogonal à l'axe longitudinal, et la hauteur de barreau est égale ou supérieure à un diamètre extérieur des capillaires dans la section de fenêtre (136, 836, 1136, 1536).

10. Ensemble réseau de capillaires (100, 700, 800, 1100, 1300, 1700) selon la revendication 8 ou 9, comprenant une plaque supérieure (1306) disposée sur ou au-dessus des capillaires (108, 1808) sur le côté supérieur (112, 1112, 1512), dans lequel au moins une partie de la plaque supérieure (1306) couvrant la section de fenêtre (136, 836, 1136, 1536) est transparente.

11. Système d'analyse d'échantillon (1800), comprenant :
l'ensemble réseau de capillaires (100, 700, 800, 1100, 1300, 1700) selon l'une quelconque des revendications 8 à 10 ; et
un détecteur de lumière (1802) positionné en alignement optique avec les canaux ouverts (678, 878, 1178, 1578), et comprenant en outre facultativement au moins l'une parmi :
une source lumineuse (1806) positionnée en alignement optique avec les canaux ouverts (678, 878, 1178, 1578) ;
une source d'échantillon (1822) à partir de laquelle un échantillon peut être introduit dans les capillaires (108, 1808) ;
une source de tension (1854) communiquant électriquement avec les capillaires (108, 1808), et configurée pour appliquer une différence de potentiel entre les capillaires (108, 1808) efficace pour effectuer une électrophorèse capillaire sur des échantillons dans les capillaires (108, 1808) ;
une source de milieu de séparation analytique (1850) à partir de laquelle un milieu de séparation analytique peut être introduit dans les capillaires (108, 1808) ;
une source de milieu de séparation analytique (1850) à partir de laquelle un milieu de séparation analytique peut être introduit dans les capillaires (108, 1808), dans lequel le milieu de séparation analytique comprend un milieu de séparation électrophorétique.

12. Procédé pour analyser un échantillon, le procédé comprenant :
la fourniture d'un ensemble réseau de capillaires (100, 700, 800, 1100, 1300, 1700) selon l'une quelconque des revendications 8 à 10 ; et
la réalisation d'une mesure optique d'échantillons détectables respectivement au niveau des fenêtres pour acquérir des données optiques d'un ou plusieurs analytes des échantillons.

13. Procédé selon la revendication12, dans lequel la réalisation de la mesure optique comprend l'une parmi :
la détection de lumière d'émission émise depuis les fenêtres, dans lequel la détection est effectuée sur le côté supérieur (112, 1112, 1512) ;
la détection de lumière d'émission émise depuis les fenêtres, dans lequel la détection est effectuée sur un côté inférieur (116, 1116, 1516) de l'ensemble réseau de capillaires (100, 700, 800, 1100, 1300, 1700) opposé au côté supérieur (112, 1112, 1512) ;
l'irradiation des échantillons avec une lumière d'excitation et la détection de lumière d'émission émise depuis les fenêtres, dans lequel l'irradiation et la détection sont toutes deux effectuées sur le côté supérieur (112, 1112, 1512) ;
l'irradiation des échantillons avec une lumière d'excitation et la détection de lumière d'émission émise depuis les fenêtres, dans lequel l'irradiation est effectuée sur le côté supérieur (112, 1112, 1512), et la détection est effectuée sur un côté inférieur (116, 1116, 1516) de l'ensemble réseau de capillaires (100, 700, 800, 1100, 1300, 1700) opposé au côté supérieur (112, 1112, 1512).

14. Procédé selon la revendication 12 ou 13, comprenant au moins l'un parmi :
l'écoulement des échantillons dans les capillaires (108, 1808) ;
avant et/ou pendant la réalisation de la mesure optique, la séparation analytique des échantillons dans chaque capillaire (108, 1808) ;
avant et/ou pendant la réalisation de la mesure optique, la séparation analytique des échantillons dans chaque capillaire (108, 1808), dans lequel la séparation analytique des échantillons comprend la mise en œuvre d'une électrophorèse capillaire sur les échantillons ;
l'écoulement d'un milieu de séparation analytique dans les capillaires (108, 1808) ;
l'écoulement d'un milieu de séparation analytique dans les capillaires (108, 1808), dans lequel le milieu de séparation analytique comprend un milieu de séparation électrophorétique.
